# EUROPEAN PATENT SPECIFICATION

(11) **EP 2 867 941 B1**
(45) Date of publication and mention of the grant of the patent: **21.08.2019**
(21) Application number: 13744790.0
(22) Date of filing: 01.07.2013
(51) Int. Cl.: H01M 10/42, H01M 4/131, H01M 4/02, H01M 4/505, H01M 4/525, H01M 4/587, H01M 10/0525, H01M 4/133

(54) **LITHIUM SECONDARY BATTERY AND VEHICLE WITH THE SAME**
LITHIUMSEKUNDÄRBATTERIE UND FAHRZEUG DAMIT
BATTERIE SECONDAIRE AUX IONS DE LITHIUM ET VÉHICULE ÉQUIPÉ DE LADITE BATTERIE

(30) Priority: 29.06.2012 JP 2012147815
(43) Date of publication of application: 06.05.2015
(73) Proprietor: Toyota Jidosha Kabushiki Kaisha, Toyota-shi, Aichi-ken, 471-8571 (JP)
(72) Inventor: TAMAKI, Takumi, Toyota-shi, Aichi-ken, 471-8571 (JP); NAGAI, Hiroki, Toyota-shi, Aichi-ken, 471-8571 (JP); WASEDA, Tetsuya, Toyota-shi, Aichi-ken, 471-8571 (JP)
(74) Representative: Intès, Didier Gérard André
(86) International application number: PCT/IB2013/001398
(87) International publication number: WO 2014/001898

(56) References cited:
- WO-A1-2011/114433
- WO-A1-2012/032700
- JP-A- 2004 253 174
- KOENIG G M ET AL: "Hollow lithiated metal oxide particles as lithium-ion battery cathode materials", ELECTROCHIMICA ACTA, ELSEVIER SCIENCE PUBLISHERS, BARKING, GB, vol. 56, no. 3, 1 January 2011 (2011-01-01), pages 1426-1431, XP027594152, ISSN: 0013-4686, DOI: 10.1016/J.ELECTACTA.2010.10.066 [retrieved on 2010-11-04]

## Description

### BACKGROUND OF THE INVENTION

### 1. Field of the Invention

The invention relates to a lithium secondary battery and a vehicle with the lithium secondary battery. More specifically, it relates to a lithium secondary battery provided with a positive electrode active material of a so-called hollow structure, and a vehicle with the lithium secondary battery.

### 2. Description of Related Art

Compared to existing batteries, lithium secondary battery are small, light-weight, have high energy density and excellent power density. For these reasons, lithium secondary batteries are preferably used as so-called portable power sources for personal computers, mobile terminals, or the like, and as high-output power sources for vehicular onboard use. In a typical constitution of a lithium secondary battery, a positive electrode, a negative electrode and an electrolytic solution are housed in a battery case. The positive and the negative electrodes are provided with a material (active material) that may store and release lithium ions reversibly, and charging and discharging are carried out due to the lithium ions moving back and forth between those electrodes.

If it could be used with a wide state of charge (SOC) window, a lithium secondary battery may increase the amount of energy that may be extracted and used effectively from one unit volume or one unit mass of the battery. This is particularly significant in onboard batteries from which high output and high energy density are demanded (for instance, batteries for vehicle drive power source use). However, in general with lithium secondary batteries, when the SOC becomes low (for instance, becomes 30% or lower), the output characteristics tend to decrease abruptly. As techniques that may address such problems, Japanese Patent Application Publication No. 2011-119092 (JP 2011-119092 A) may be cited. Described in JP 2011-119092 A is a lithium secondary battery that uses a positive electrode active material of a hollow structure having a shell portion formed of a lithium transition metal oxide, a hollow portion formed therein, and a through-hole passing through the shell portion. With batteries of such a constitution, since the contact surface area between the electrolytic solution and the active material may be kept wide, material exchanges (for instance, movements of lithium ions) between the electrolytic solution and the active material can be carried out more efficiently. Therefore, a battery of such a constitution has excellent output characteristics (in particular, output in low SOC regions) and allows the desired output to be exhibited in a broader SOC range.

### SUMMARY OF THE INVENTION

Meanwhile, according to studies by the inventors, when using a positive electrode active material of a hollow structure, there is room for further studies regarding input characteristics. For instance, when such a positive electrode active material is used, after rapid-charging (that is to say, when the battery has reached a high-voltage state), lithium is prone to deposition on the negative electrode, whereby a capacity decrease occurs readily, compared to when a positive electrode active material of a generic porous structure (solid structure) is used.

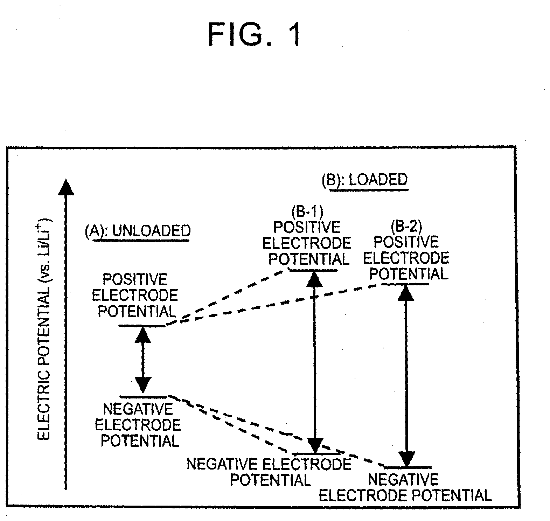

The inventors studied the causes of the capacity decrease described above. As a result, it was revealed that the electrode potential on-load (when the battery has reached a high-voltage state) was different depending on the species of positive electrode active material used, as shown in FIG. 1. In FIG. 1, (A) represents the unloaded electric potentials of the positive and the negative electrodes, and (B) represents the loaded electric potentials of the positive and the negative electrodes, respectively. In addition, among (B), the electric potential state is represented by (B-1) when a battery using a positive electrode active material of a generic porous structure (solid structure) was charged and (B-2) when a battery using a positive electrode active material of a hollow structure was charged, respectively. That is to say, according to the studies of the inventors, when a positive electrode active material of a hollow structure is used, due to the resistance of the positive electrode being diminished compared to a positive electrode active material of a solid structure, the extent of the rise in loaded positive electrode potential is small, as shown in (B-2). Therefore, it was found that even if the charging voltage (voltage between the positive and the negative terminals) is set similarly for each, the loaded negative electrode potential becomes lower than in the case of (B-1), specifically, than when a positive electrode active material particle of solid structure is used. Above all, it was found that, at high load after large current charging (large current input), the negative electrode potential approaches the lithium deposition potential (or the negative electrode potential momentarily dips under the lithium deposition potential), and lithium deposits readily over the negative electrode. As it reduces the amount of lithium ions that may participate in charge-discharge, such lithium deposition may become a cause for the decrease in battery capacity and is not desirable. Therefore, in batteries that may be used in applications where a charge-discharge pattern in which lithium deposition occurs readily (for instance, large current charging prone to high charges) is repeated frequently, suppressing such a decrease in battery capacity is especially important. Thus, the inventors considered suppressing such lithium deposition by enlarging the surface area of a negative electrode active material that may adsorb lithium ions physically (that is to say, by interaction of van der Waals forces). However, if the surface area of the negative electrode active material is enlarged merely, the electrolytic solution (typically, the non-aqueous solvent constituting the electrolytic solution) becomes prone to decomposition, and the possibility that a conflict occurs exists, of a decrease in durability (charge-discharge cycle characteristic). Therefore, as a result of earnest studies, it was discovered that, by adjusting to a preferred range the krypton (Kr) adsorption amount of the negative electrode active material, the input characteristics may be improved and excellent output characteristics and durability may be exhibited, completing the invention.

The invention provides a lithium secondary battery that may exhibit all the more excellent output characteristics and durability (capacity retention rate) than when a particle of a hollow structure is used as a positive electrode active material. The invention also provides a vehicle with the lithium secondary battery.

A first aspect of the invention relates to the lithium secondary battery defined by claim 1. In this battery, an electrode body that contains a positive electrode and a negative electrode, and a non-aqueous electrolytic solution are housed inside a battery case. The positive electrode is provided with a positive electrode active material particle of a hollow structure having a shell portion formed of a lamellar lithium transition metal oxide and a hollow portion formed therein. Here, the long diameter of a primary particle of the lithium transition metal oxide based on scanning electron microscope (SEM) observation is 1 µm or less, and the thickness of the shell portion based on SEM observation is 2 µm or less. In addition, the negative electrode is provided with a negative electrode active material particle formed of a carbon material. The krypton (Kr) adsorption amount is 3.5 m²/g or greater but 4 m²/g or less for the negative electrode active material particle.

For such a positive electrode active material of hollow structure, the thickness of the shell portion and the primary particle size are kept small. Therefore, the diffusion length of lithium ion is short, allowing material exchange with a non-aqueous electrolytic solution (for instance, storage and release of lithium ions) to be carried out efficiently. Therefore, a lithium secondary battery provided with such a positive electrode active material may exhibit high output characteristics (in particular, output characteristics in low SOC regions where ion diffusion into the positive electrode active material becomes rate-limiting) and may exhibit the desired output in a broad SOC range. In addition, with a negative electrode active material in which the Kr adsorption amount is 3.5 m²/g or greater, a surface area that may physically adsorb lithium ions is secured. Therefore, lithium ions may be stored adequately at high load (for instance, at large current charging time) suppressing deposition of lithium and the concomitant decrease in battery capacity. Thus, a lithium secondary battery provided with the negative electrode active material described above may exhibit excellent input characteristics with little decrease in battery capacity even if a large current charging is repeated. In addition, by bringing the Kr adsorption amount to 4 m²/g or less, degradation of the non-aqueous electrolytic solution can be suppressed adequately, allowing high durability to be maintained. As described above, the lithium secondary battery disclosed herein can combine at high levels both input-output characteristics and durability.

Here, measured by gas adsorption measurement (constant volume method) using krypton (Kr) gas as the adsorbate, the adsorbed amount of this gas is analyzed by the Brunauer-Emmett-Teller (BET) method (preferably, the multi-point method) to calculate a value (specific surface area) referred to as the "krypton (Kr) adsorption amount". Generally, lithium ions are solvated in an electrolytic solution by solvent molecules constituting the electrolytic solution. It follows that the effective cross-section of a lithium ion in an electrolytic solution is larger than in the case of the lithium ion alone, and may be for instance on the order of 0.2 nm² to 0.5 nm². Used here as the adsorbate, Kr is adequate for evaluating the adsorption capability (adsorption amount) of the solvated lithium ion, as the adsorption cross-section is about 0.2 nm², approximately on the same order as the effective cross-section of the lithium ion mentioned above. Furthermore, compared to nitrogen, argon or the like, which are used as adsorbates in generic adsorption measurements, the saturated vapor pressure is low for Kr. Therefore, measurements can be carried out accurately even when the adsorption amount is small (for instance, when the Kr adsorption amount is 5 m²/g or less). Thus, it is adequate for measuring the negative electrode active material particle disclosed herein. Thus far, there are no example of report regarding a negative electrode active material focusing on the Kr adsorption amount.

Herein, "lithium secondary battery" refers to a secondary battery that uses lithium ion as an electrolyte ion, in which charging and discharging are realized by the movement of electric charges that accompany the movements of lithium ions between the positive and the negative electrodes. Batteries that are generally referred to as lithium ion secondary batteries, lithium ion capacitors or the like are typical examples included in the lithium secondary batteries herein. In addition, "active material" herein refers to a material capable of storing and releasing (typically, insertion and desorption) reversibly the chemical species (lithium ion) that is to be an electric charge carrier in a secondary battery. In addition, with the voltage range in which a battery is generally used serving as the reference, unless expressly specified, "SOC" herein refers to the state of charge of the battery. For instance, it refers to the state of charge which has as reference the rated capacity (typically, rated capacity specified in similar conditions to rated capacity measurement for an evaluation battery described below) measured with the conditions in which the voltage between the terminals (open circuit voltage (OCV)) is 4.1 V (upper limit voltage) to 3.0 V (lower limit voltage). In addition, herein, "positive electrode active material of a hollow structure" refers to a positive electrode active material in which, in the average of the cross-sections from slicing the positive electrode active material at random locations, the proportion occupied by the hollow portion in the apparent cross-section of the active material is 5% or greater (particle void content, described below).

The SOC of a battery after starting its use can be obtained for instance through the following method (SOC-OCV measurements). [Protocol 1: discharging of residual capacity]: at 25°C, perform constant current discharging (CC-discharging) at 1 C to 3 V and further carry out constant voltage discharging (CV-discharging) at 3 V until 2 hours total is reached. [Protocol 2: CC charging]: with respect to a battery after the end of protocol 1, repeat 20 to 30 times the operation of charging at 0.1 C for 30 minutes and the operation of pausing for 20 minutes, and discontinue when 4.1 V is reached. [Protocol 3: CCCV-charging]: with respect to a battery after the end of protocol 2, CC-charge at 0.4 C to 4.1 V and after further CV-charging until 1 hour total is reached, pause for 20 minutes. [Protocol 4: CC-discharging]: with respect to a battery after the end of protocol 3, repeat 20 to 30 times the operation of discharging at 0.1 C for 30 minutes and the operation of pausing for 20 minutes, and discontinue when 3.0 V is reached.

In the above aspect, the positive electrode active material may have a through-hole that passes through the shell portion (hereafter, a hollow structure that has a through-hole in the shell portion may sometimes be referred to as "pierced hollow structure"). In a positive electrode active material of a pierced hollow structure, a non-aqueous electrolytic solution readily impregnates the hollow portion, allowing material exchange with a non-aqueous electrolytic solution to be carried out efficiently, more than a hollow structure that has no through-hole. Therefore, a battery provided with such a positive electrode active material may combine at higher levels both input-output characteristics and durability.

In the above aspect, the particle void content of the positive electrode active material particle may be 15% or greater but 80% or lower. Adopting the range above allows the hollow structure to be maintained adequately, allowing high input-output characteristics to be exhibited continuously.

In addition, in the above aspect, the long diameter of the primary particle of lithium transition metal oxide based on SEM observation may be 0.2 µm or greater. Adopting such a constitution allows both output characteristics (in particular, output characteristics in low SOC regions) and durability (capacity retention ability) to be combined at all the more higher levels.

In the above aspect, the thickness of the shell portion the hollow structure based on SEM observation may be 0.1 µm or greater. Adopting such a thickness allows high durability to be secured against stresses that may be exerted during battery manufacturing or use, expansion and contraction of the positive electrode active material that accompanies charging and discharging, or the like. Thus, battery capabilities can be exhibited more stably.

In the above aspect, the lithium transition metal oxide may contain at least one species of metal element among Ni, Co and Mn. In addition, the lithium transition metal oxide may contain Ni, Co and Mn.

In the above aspect, the main component may be a lithium transition metal oxide represented by the general formula: Li₁₊ₓNi_{y}Co_{z}Mn_{(1-y-2)}M_{γ}O₂. Here, 0 ≤ x ≤ 0.2, 0.1 < y < 0.9, 0.1 < z < 0.4 and 0 ≤ γ ≤ 0.03, and M is an additive of at least one species chosen from the group consisting of Zr, Mo, W, Mg, Ca, Na, Fe, Cr, Zn, Si, Sn, Al, B and F. Since the energy density is high, the above oxide can realize all the more higher battery characteristics (for instance battery capacity).

Furthermore, in the above aspect, tungsten (W) may be contained as the M element.The reaction resistance is reduced, allowing all the more higher output characteristics to be exhibited.

The negative electrode active material particle may contain graphite coated with amorphous carbon. A battery that uses a negative electrode active material of the above constitution may exhibit a high capacity, and the increase in irreversible capacity caused by the decomposition of the non-aqueous electrolytic solution is suppressed.

In addition, in the above aspect, the oil absorption amount of the negative electrode active material particle for linseed oil may be 50 (ml/100 g) or greater but 60 (ml/100 g) or less. Setting the oil absorption amount of the negative electrode active material to the above range improves affinity for the electrolytic solution, allowing high battery capabilities (for instance, excellent output characteristics) to be exhibited particularly in applications where charge-discharge with large current (rapid charge-discharge) is repeated.

In the above aspect, the ratio (Cₐ/C_{c}) between the positive electrode capacity (C_{c}(mAh)), which is calculated by the product of the theoretical capacity per unit mass (mAh/g) of the positive electrode active material and the mass (g) of the positive electrode active material, and the negative electrode capacity (Cₐ(mAh)), which is calculated by the product of the theoretical capacity per unit mass (mAh/g) of the negative electrode active material and the mass (g) of the negative electrode active material, may be 1.7 or greater but 1.9 or lower. The capacity proportion between the facing positive electrode and negative electrode influences directly the battery capacity (or irreversible capacity) and energy density. Depending on the conditions of use, or the like, of the battery (for instance rapid charging), causing deposition of lithium is facilitated. Setting the capacity ratio between the facing positive and negative electrodes to the above range allows the deposition of lithium to be suppressed adequately while battery characteristics such as battery capacity and energy density are kept satisfactory.

In the above aspect, above-mentioned electrode body may be provided with an elongated positive electrode in which a positive electrode active material layer of a prescribed width is formed over an elongated positive electrode collector along the lengthwise direction of the collector, and an elongated negative electrode in which a negative electrode active material layer of a prescribed width is formed over an elongated negative electrode collector along the lengthwise direction of the collector. A rolled electrode body having the elongated positive electrode and the elongated negative electrode layered in insulated state and rolled in the lengthwise direction is adequate. With a rolled electrode body, from the shape thereof, the diffusion of lithium ions tends to be relatively delayed at the center portion in the width direction of the positive and the negative electrodes (typically, the central portion of the roll). Thus, application of the invention is particularly useful.

The lithium secondary battery in the above aspect may equip a vehicle as a drive power source. The lithium secondary battery disclosed herein may be one that has excellent input characteristics and exhibits satisfactory output characteristics in low SOC regions. Thus, taking advantage of such features, the battery may be used adequately as drive power source for vehicles such as hybrid vehicles (HVs), plug-in hybrid vehicles (PHVs) and electric vehicles (EVs). Vehicles fitted with any of the lithium secondary batteries disclosed herein (may be of a morphology of a battery-pack, in which a plurality of batteries are connected) are included in the items disclosed herein. As desirable examples of such vehicle, vehicles equipped with the lithium secondary battery as power source (for instance, HVs, and PHVs and EVs, which can be charged with a household power source, or the like) may be cited.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a conceptual figure for describing the causes of capacity decrease; (A) representing the electric potentials of the positive and the negative electrodes when unloaded and (B) representing the electric potentials of the positive and the negative electrodes when loaded;
FIG. 2 is a perspective view showing schematically the external shape of a lithium secondary battery according to an embodiment of the invention;
FIG. 3 is a view showing schematically the cross-sectional structure along the III-III line of the lithium secondary battery of FIG. 2;
FIG. 4 is a schematic view showing the constitution of a rolled electrode body of a lithium secondary battery according to an embodiment of the invention;
FIG. 5 is a view showing schematically the cross-sectional structure along the V-V line of the rolled electrode body of FIG. 4;
FIG. 6 is a view showing schematically the cross-sectional structure of a positive electrode active material particle according to an embodiment of the invention;
FIG. 7 is a flow-chart showing the overview of a production method for a positive electrode active material according to an embodiment of the invention;
FIG. 8 is an SEM observation picture of a positive electrode active material particle according to an embodiment of the invention;
FIG. 9 is a cross-sectional SEM observation picture of a positive electrode active material particle according to an embodiment of the invention;
FIG. 10 is a graph showing the relationship between the Kr adsorption amount for the negative electrode active material and the capacity retention rate (%); and
FIG. 11 a side view showing schematically a vehicle fitted with a lithium secondary battery according to an embodiment of the invention.

### DETAILED DESCRIPTION OF EMBODIMENTS

Hereafter, embodiments of the invention will be described using suitable figures. Each figure is drawn schematically and does not necessarily reflect an actual object. Matters other than the items particularly referenced herein, which are matters required to the performance of the invention, may apply common general technical knowledge in the art. The invention can be carried out based on the contents disclosed herein and common general technical knowledge in the art. In addition, hereafter, members and sites that have similar effects are described by assigning the same keys, and a redundant description may be sometimes omitted or simplified.

The lithium secondary battery disclosed herein is of a constitution in which an electrode body that contains a positive electrode and a negative electrode, and a non-aqueous electrolytic solution are housed inside a battery case. Then, the positive electrode is provided with a positive electrode active material particle of a hollow structure having a shell portion constituted by a lamellar lithium transition metal oxide and a hollow portion formed therein. In addition, the negative electrode is provided with a negative electrode active material particle formed of a carbon material. Hereafter, such positive electrode active material particle and negative electrode active material particle will be described in detail. Thereafter, other constitutive elements of the battery will be described one after another.

### <Positive electrode active material particle>

The positive electrode active material disclosed herein assumes the particle morphology of a hollow structure having a shell portion and a hollow portion (cavity portion) formed therein. The particle shape of such a positive electrode active material may be, typically, roughly spherical, somewhat distorted spherical, or the like. As comparable ones to particles of such hollow structure, particles of generic porous structure (solid structure) may be cited. Here, porous structure indicates a structure in which material portions and void portions co-exist throughout the entire particle (sponge-like structure). As representative examples of active material particle having a porous structure, active material particles obtained by the so-called spray-baking method (sometimes referred to as spray-drying preparation) may be cited. The active material particle of the hollow structure disclosed herein is structurally clearly distinct from the active material particle of the above porous structure on the point that the material portion is offset to the shell portion and a clearly organized space is formed in the above-mentioned hollow portion, and the point that the organized space of the hollow portion is larger than the gaps between the primary particles constituting the secondary particle.

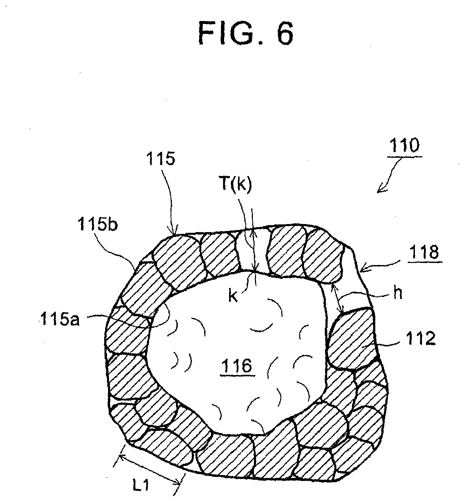

A representative structure of such a positive electrode active material particle is shown schematically in FIG. 6. This positive electrode active material particle 110 is a particle of a structure having a shell portion 115 and a hollow portion 116. The shell portion 115 has a morphology in which a primary particle 112 is aggregated into a spherical shell shape. In one preferred mode, the shell portion 115 has a morphology in which primary particles 112 are stringed into a cycle (beads) in a cross-sectional SEM observation picture thereof. The morphology may be such that primary particles 112 are stringed alone (monolayer) throughout the entire shell portion 115, and a morphology that has a portion in which primary particles 112 are stringed with two or more on top of each other (in a multilayer) is also suitable. The number of layers of primary particle 112 in the stringed portion mentioned above is preferably about 5 or less (for instance, 2 to 5), and more preferably about 3 or less (for instance, 2 to 3). The positive electrode active material particle 110 according to an embodiment of the invention is constituted into a morphology in which the primary particles 112 are stringed substantially in a monolayer throughout the entire shell portion 115.

There is little aggregation of the primary particle 112 for the positive electrode active material particle (secondary particle) 110 of such a constitution compared to a positive electrode active material particle of a compact structure with no cavity inside. For this reason, there are little grain boundaries inside the particle (and by extension the diffusion length of lithium ion is shorter) and diffusion of lithium ions into the particle is rapid. Consequently, with a lithium secondary battery having a positive electrode active material particle 110 with such little grain boundaries, the output characteristics can be improved effectively. For instance, a lithium secondary battery may be constructed, which demonstrates satisfactory output even in low SOC regions (for instance, when the SOC is 30% or lower) where ion diffusion into the active material becomes rate-limiting. Here, "primary particle" refers to a particle considered as a unit particle (ultimate particle) as determined by the geometric morphology of the external appearance. In the positive electrode active material disclosed herein, the primary particle is typically an aggregate of crystallites of lithium transition metal oxide. Observation of the shape of the positive electrode active material can be carried out with, for instance, "Hitachi High-tech Hitachi Ultra-high Resolution Field-emission Scanning Microscope S5500" from Hitachi High-Technologies.

### <Shape of secondary particle>

It is desirable that the average particle size (secondary particle size) of the positive electrode active material particle 110 is, for instance, about 2 µm to 25 µm. A positive electrode active material of such a constitution allows satisfactory battery capabilities to be exhibited more stably. If the average particle size is too small, as the volume of the hollow portion is small, the effect of improving the battery capabilities may tend to decrease. If the average particle size is about 3 µm or greater, it is more desirable. In addition, from the point of view of productivity, or the like, of the positive electrode active material, average particle sizes of about 25 µm or less is desirable and about 15 µm or less (for instance, about 10 µm or less) is more desirable. In one embodiment of the invention, the average particle size of the positive electrode active material is about 3 µm to 10 µm (for instance, 3 µm to 8 µm). The average particle size of the positive electrode active material particle 110 can be determined as a volume-based median diameter (D₅₀) by conventional methods in the art, for instance, by measurements based on laser diffraction/light scattering methods. In addition, adjustments of the particle size can be carried out for instance in the production method for the positive electrode active material particle 110 described below, via the pH in the nucleation stage, the time during which the particle growth process continues, the speed of deposition of the transition metal hydroxide in the particle growth process, or the like. The speed of deposition of the transition metal hydroxide can be adjusted for instance via the concentrations of the chemical species, the pH, the temperature of the reaction system, or the like. Alternatively, the particles may be sorted by generic sieve separation to adjust the average particle size. Such average particle size adjustment methods can be performed alone or in suitable combinations.

### <Shape of primary particle>

For the primary particle 112 that constitutes the positive electrode active material particle 110, the long diameter L1 thereof is 1 µm or less and may be, for instance, about 0.1 µm to 1 µm. According to observations by the inventors, if the long diameter L1 of the primary particle 112 is too small, the ability of the battery to retain capacity may decrease. From this point of view, a positive electrode active material in which the long diameter L1 is 0.2 µm or greater is desirable, and more preferably 0.3 µm or greater and even more preferably 0.4 µm or greater. Meanwhile, if the long diameter L1 is too large, the distance from the surface to the interior (center of L1) of the crystal (diffusion length of lithium ion) becomes longer, ion diffusion into the crystal becomes slow, and the output characteristics (in particular, output characteristics in low SOC regions) tend to decrease. From this point of view, the long diameter L1 is 1 µm or less, and typically, 0.8 µm or less, for instance, 0.75 µm or less, is desirable. In one preferred mode, the long diameter L1 of the primary particle is 0.2 µm to 1 µm (for instance, 0.3 µm to 0.8 µm).

The long diameter L1 of the primary particle 112 can be measured for instance based on an SEM observation picture of the particle surface of the positive electrode active material particle (secondary particle) 110. When measuring the primary particle size of the positive electrode active material particles contained in the positive electrode active material layer, performing for the positive electrode active material particles, which are appearing in the cross-section from an active material layer that has been split, an SEM observation of the surface thereof is adequate. For instance, in such an SEM observation picture, a primary particle 112 that is suitable for specifying the long diameter L1 is identified. That is to say, a plurality of primary particles 112 are pictured in an SEM observation picture of the particle surface of a positive electrode active material particle (secondary particle) 110. Thus, a plurality of these primary particles 112 are extracted in descending order of displayed surface areas in the SEM observation picture. This allows a primary particle 112 to be extracted, of which the outline that is roughly aligned with the longest long diameter L1 is pictured in the SEM observation picture of the particle surface. Then, it is adequate that the length of the longest major axis in the extracted primary particle 112 serves as the long diameter L1.

### <Thickness of the shell portion>

In the positive electrode active material particle 110, the thickness of the shell portion 115 (the portion in which the primary particles are assembled into a spherical shell) is 2 µm or less, preferably 1.8 µm or less and more preferably 1.5 µm or less. The smaller the thickness of the shell portion 115, the more readily the lithium ions are released from the interior of the shell portion 115 (center of the thickness) at charging time and the more readily the lithium ions are absorbed into the interior of the shell portion 115 at discharging time. Therefore, at the same time as the amount of lithium ions that a unit mass of active material particle may store and release under prescribed conditions can be increased, the resistance when the active material particle stores and releases lithium ions may be alleviated. Consequently, a lithium secondary battery that is formed using such positive electrode active material particle 110 may be one with excellent output in low SOC regions.

While the lower limit value of the thickness of the shell portion 115 is not limited in particular, in general, roughly 0.1 µm or greater is desirable. Setting the thickness of the shell portion 115 to 0.1 µm or greater allows a higher durability to be secured against stresses that may be exerted during battery manufacturing or use, expansion and contraction of the positive electrode active material that accompanies charging and discharging, or the like. This may stabilize the capabilities of the lithium secondary battery. From the point of view of combining both the internal resistance-reduction effect and durability, the thickness of the shell portion 115 is preferably 0.1 µm to 2 µm, more preferably 0.2 µm to 1.8 µm and particularly preferably 0.5 µm to 1.5 µm.

Here, the thickness of the shell portion 115 refers to the mean value of the shortest distance T(k) from an arbitrary position k of an internal face 115a of the shell portion 115 (however, the portion corresponding to the through-hole 118 is not included in the internal face 115a) to an external face 115b of the shell portion 115, in the cross-sectional SEM observation picture of the positive electrode active material or of a material containing the active material particle 110. More concretely, determining the shortest distance T(k) for a plurality of positions on the internal face 115a of the shell portion 115 and calculating the arithmetic mean value thereof. In this case, the greater the number of point determining the shortest distance T(k), the more the thickness T of the shell portion 115 converges to the mean value, allowing the thickness of the shell portion 115 to be evaluated appropriately. In general, the thickness of the shell portion 115 is determined preferably based on at least 10 (for instance, 20 or more) positive electrode active material particles 110. In addition, the thickness of the shell portion 115 is determined preferably based on SEM observation pictures in cross-sections at 3 arbitrary locations at least (for instance, 5 locations or more) of a sample (for instance, of a positive electrode active material element).

### <Particle void content>

The positive electrode active material particle 110 has a hollow structure in which the particle void content is 5% or greater and preferably has a hollow structure in which the particle void content is 10% or greater (for instance, 15% or greater). If the particle void content is too small, there may be cases where the advantages of being a hollow structure is difficult to exhibit sufficiently. The particle void content may be 20% or greater (typically 23% or greater and preferably 30% or greater). While the upper limit of the particle void content is not limited in particular, from the points of view of durability (for instance, capability of resisting compression stresses, or the like, that may be exerted during battery production or use and retaining a hollow shape), manufacturability, or the like, of the active material particle, in general 95% or lower (typically 90% or lower, for instance, 80% or lower) is adequate. Adjustment of the particle void content may be carried out, for instance in the production method for the positive electrode active material particle 110 described below, by adjusting the time during which the particle growth process continues, the rate of deposition of the transition metal hydroxide in the particle growth process (for instance, ammonia concentration), or the like.

Here, the "particle void content" refers to the average, in the cross-sections from slicing the positive electrode active material at random locations, of the proportion occupied by the hollow portion in the apparent cross-section of the active material. This proportion can be assessed, for instance, via an observation picture from SEM in an suitable cross-section of the positive electrode active material particle or a material containing the active material particle. Such a cross-sectional SEM observation picture can be obtained, for instance, by cutting (or grinding) a sample in which a positive electrode active material particle or a material containing the active material particle has been embedded with a suitable resin (preferably, a thermosetting resin), and observing the cross-section thereof by SEM. In the cross-sectional SEM observation picture, the shell portion 115, the hollow portion 116 and the through-hole 118 of the active material particle can be distinguished by the differences in color or shade. For the plurality of active material particles 110 represented in the arbitrary cross-sectional SEM observation picture of the sample, the ratio (C_{V}/C_{T}) is obtained, between the surface area C_{V} occupied by the hollow portion 116 of these active material particles and the cross-section C_{T} occupied in appearance by these active material particles 110. Here, the cross-section C_{T} occupied in appearance by an active material particle refers to the cross-section occupied by the shell portion 115, the hollow portion 116 and the through-hole 118 of an active material particle. The proportion occupied by the hollow portion 116 among the apparent volume of the active material particle (that is to say, the particle void content) is roughly determined by the ratio (C_{V}/C_{T}).

Preferably, the values of the ratio (C_{V}/C_{T}) are arithmetically averaged for the plurality of arbitrary cross-sectional SEM observation pictures of the sample. In this way, the greater the number of cross-sectional SEM observation pictures for determining the ratio (C_{V}/C_{T}), and, in addition, the greater the number of active material particles serving as the basis for calculating the ratio (C_{V}/C_{T}), the more the arithmetic mean value of the ratio (C_{V}/C_{T}) converges. In general, it is desirable to determine the particle void content based on at least 10 (for instance, 20 or more) active material particles. In addition, it is desirable to determine the particle void content based on SEM observation pictures in cross-sections at 3 arbitrary locations at least (for instance, 5 locations or more) of a sample.

### <Through-hole>

In one embodiment of the invention, the shell portion 115 has a through-hole 118 that causes through the hollow portion and the particle exterior to communicate. The positive electrode active material particle 110 preferably has a through-hole 118 that passes through the shell portion 115 so that the hollow portion 116 and the exterior (the exterior of the particle 110) are spatially continuous. Having such a through-hole 118 helps the electrolytic solution moving back and forth between the hollow portion 116 and the exterior, which replaces adequately the electrolytic solution inside the hollow portion 116. Therefore, solution depletion is less likely to occur, in which there is insufficient electrolytic solution inside the hollow portion 116, such that the primary particle 112 facing the hollow portion 116 may be utilized more actively for charging and discharging. Such a constitution allows the output characteristics (in particular output characteristics in low SOC regions) of the lithium secondary battery to be improved even more, combining the facts that the diffusion of the lithium ions into the crystals is rapid due to the thickness of the shell portion 115 being 2 µm or less and that the electrolytic solution may be brought in contact efficiently with the primary particle 112.

The positive electrode active material particle 110 has a number of through-holes 118 of preferably on the order of about 1 to 10 (for instance, 1 to 5) on average per particle of the active material particle 110. If the average number of through-holes is too large, the hollow shape sometimes becomes difficult to maintain. The positive electrode active material particle 110 with the preferred average number of through-holes disclosed herein allows battery capability improvement effects (for instance, the effect of improving the output) owing to having an open hollow structure to be exhibited satisfactorily and stably while retaining the strength of the positive electrode active material particle 110.

It is adequate that the opening width h of the through-hole 118 is roughly 0.01 µm or greater as a mean value of a plurality of positive electrode active material particles. Here, the opening width h of the through-hole 118 refers to the distance in the narrowest portion of the path spanned by the through-hole 118 from the exterior to the hollow portion 116 of the positive electrode active material particle 110. If the opening width of the through-hole 118 is 0.01 µm or greater on average, the through-hole 118 may be caused to function more effectively as a flow-path for the electrolytic solution. This allows the effects of improving battery capabilities of the lithium secondary battery to be exhibited more appropriately. When one positive electrode active material particle 110 has a plurality of through-holes 118, it is adequate to adopt as the opening width of the active material particle 110 the opening width of the through-hole having the largest opening width among this plurality of through-holes 118. In addition, the opening width h of the through-hole 118 may be 2.0 µm or less on average, more preferably 1.0 µm or less on average and even more preferably 0.5 µm or less on average.

Characteristic values such as the average number of through-holes and the average opening sizes can be assessed for instance by observing the cross-section of a positive electrode active material particle with an SEM. For instance, it is adequate to cut a positive electrode active material particle or sample in which a material containing the active material particle has been embedded in a suitable resin (preferably, a thermosetting resin) with a suitable cross-section and carry out the SEM observation while gradually grinding this sectioned surface. Alternatively, from the fact that the direction (orientation) of the positive electrode active material particle within the sample can be hypothesized to be roughly random in general, the characteristic values may also be calculated by statistically processing the SEM observation results from a single cross-section or a relatively small number of cross-sections, at on the order of 2 to 10 locations.

In one embodiment of the invention, the shell portion 115 is sintered compactly (typically, compactly at least to an extent that does not let through an electrolytic solution for a generic non-aqueous battery), in the portions other than the through-hole 118. With the positive electrode active material particle 110 of such a structure, the locations where the electrolytic solution may flow through between the exterior and the hollow portion 116 of the particle 110 are confined to the locations where the through-hole 118 is present. This may exhibit particularly advantageous effects for instance in an active material particle used in a positive electrode of a battery provided with a rolled electrode body. That is to say, in a battery provided with a rolled electrode body, when the charging and discharging of the battery are repeated, the electrolytic solution is squeezed out from the electrode body (in particular, the positive electrode active material layer) due to expansion and contraction of the active material that accompanies the charging and discharging. This sometimes may decrease the battery capabilities (for instance output capability) due to the electrolytic solution being insufficient in a portion of the electrode body. With the active material particle 110 of the above constitution , since a discharge of the electrolytic solution inside the hollow portion 116 is prevented in the portions other than the through-hole 118, insufficiency (depletion) of the electrolytic solution in the positive electrode active material layer can be suppressed or alleviated effectively. In addition, since such an active material particle may be high shape-retaining ability (unlikely to collapse; may be reflected for instance in the average hardness being high, the compressive strength being high, or the like), satisfactory battery capabilities can be exhibited more stably.

### <Hardness of the positive electrode active material>

The average hardness of the positive electrode active material particle 110 is, preferably, roughly 0.5 MPa or greater (typically 1 MPa or greater, for instance, 2 MPa to 10 MPa). The production method for the active material particle of the open hollow structure described below is suitable as a production method for an active material particle having such average hardness. An active material particle of a pierced hollow structure obtained by this method is harder (average hardness is high) than for instance a positive electrode active material particle of a generic porous structure obtained by spray-baking preparation (also referred to as spray-drying preparation), and may be one with excellent morphological stability. An active material particle with a hollow structure and a high average hardness (in other words, with a high shape-retaining ability) in this manner, may realize a battery that stably exhibits higher capabilities. Here, "average hardness" refers to a value obtained by dynamic micro-hardness measurement performed using a planar diamond indenter 50 µm in diameter, under the condition of 0.5 mN/s to 3 mN/s loading rate. For such dynamic micro-hardness measurements, for instance, a micro-hardness tester, model "MCT-W500" manufactured by Shimadzu, can be used. The more the active material particles for which the hardness measurement is carried out, the more the arithmetic mean value of the hardness of the active material converges. Adopting as the average hardness an arithmetic mean value based on at least 3 (preferably, 5 or more) active material particles is desirable.

### <Ratio (A/B) between half-height widths of the positive electrode active material>

For the positive electrode active material particle 110, it is desirable that the ratio (A/B) of the half-height width A of a peak obtained from the diffraction plane of Miller indices (003) versus the half-height width B of a peak obtained from the diffraction plane of Miller indices (104) in a powder X-ray diffraction pattern using a CuKα-beam, is roughly 0.7 or lower (typically, less than 0.7). More desirable is 0.65 or lower, and even more desirable is 0.6 or lower (typically, less than 0.6, for instance, 0.58 or lower). For a lithium transition metal oxide that demonstrates such half-height width ratio (A/B), the plane a lithium ion can be inserted into is wider and the ion diffusion length within the crystal is short, compared to a lithium transition metal oxide that demonstrates a larger half-height width ratio (A/B). Consequently, positive electrode active material of such a constitution allows the output characteristics (in particular output characteristics in low SOC regions) of a lithium secondary battery to be improved all the more effectively. While the lower limit of the half-height width ratio (A/B) is not limited in particular, from the point of view of manufacturability, in general, a positive electrode active material in which the half-height width ratio (A/B) is 0.35 or greater (for instance, 0.4 or greater), is desirable. In addition, with a battery provided with a positive electrode active material in which the half-height width ratio (A/B) is too small, there is the possibility that metal elements inside the positive electrode active material become prone to elution into the electrolytic solution during high-temperature storage. Such an elution of metal elements may become a cause that provokes capacity deterioration in a battery. Therefore, from the point of view of ability to retain capacity during high-temperature storage, 0.4 or greater (for instance, 0.4 < (A/B)) is adequate and 0.5 or greater (for instance, 0.5 < (A/B)) is desirable, for the half-height width ratio (A/B) of the positive electrode active material. From the point of view of balancing both the output characteristics and the capacity retention ability, it is possible to adopt a positive electrode active material that satisfies, 0.4 ≤ (A/B) < 0.7. A positive electrode active material that satisfies 0.4 < (A/B) ≤ 0.65 (furthermore, 0.4 < (A/B) < 0.6, for instance 0.5 ≤ (A/B) < 0.6) may realize more satisfactory results. Adjustment of the half-height width ratio (A/B) may be carried out by adjusting, for instance, the amount of lithium mixed in the mixing step, the maximum baking temperature in the baking step, or the like, in the production method for the positive electrode active material particle 110 described below.

### <Composition of the positive electrode active material>

The positive electrode active material particle 110 (more specifically, the shell portion 115 of the positive electrode active material particle 110) is constituted from a lithium transition metal oxide having a lamellar crystal structure (typically, a lamellar rocksalt-type structure belonging to a hexagonal system). Preferably, the lithium transition metal oxide contains a metal element M_{T}. The M_{T} is at least one species among Ni, Co and Mn. The total content in Ni, Co and Mn (that is to say the content in M_{T}) in the positive electrode active material, when the total amount of all the metal elements M_{T} other than lithium contained in the positive electrode active material is 100 mol% in molar percentage, may be for instance 85 mol% or more (preferably 90 mol% or more and typically 95 mol% or more) thereof. The M_{T} preferably contains at least Ni. For instance, with the total amount of metal elements other than lithium contained in the positive electrode active material being 100 mol%, a positive electrode active material containing Ni at 10 mol% or more (more preferably 20 mol% or more) is desirable. Since a positive electrode active material of such composition is suited for producing a positive electrode active material particle of a hollow structure by applying the production method described below, it allows a positive electrode active material particle of the desired structure to be obtained readily.

In one embodiment of the invention, a lithium transition metal oxide in which the M_{T} contains all of Ni, Co and Mn (hereafter may be noted "LNCM oxide") may be cited. For instance, on the basis of the number of atoms, with the total amount of Ni, Co and Mn (that is to say, the amount of M_{T} (m_{MT})) being 1, an LNCM oxide in which the amounts of Ni, Co and Mn are all over 0 but 0.7 or lower (for instance, over 0.1 but 0.6 or lower and typically over 0.3 but 0.5 or lower) may be adopted preferably. A lithium transition metal oxide (LNCM oxide) of such a ternary system is desirable, as synthesis of an oxide with a composition containing Li in excess of M_{T} (that is to say, an LNCM oxide that satisfies 1.00 < (m_{Li/}m_{MT}) is facilitated. This is believed to be due to the fact that the LNCM oxide has the property of incorporating an excessive amount of Li into the transition metal layer in the layered structure mentioned above. In one preferred mode, with the amount of M_{T} (on the basis of the number of atoms) being 1, the amount of Ni and the amount of Mn are roughly on the same order (for instance, the difference between the amount of Ni and the amount of Mn is 0.1 or less). For instance, a composition in which the amounts of Ni, Co and Mn are roughly on the same order may be adopted preferably. LNCM oxide of such a composition is desirable as it demonstrates excellent thermal stability as a positive electrode active material.

In addition to M_{T} (that is to say, at least one species of Ni, Co and Mn), the positive electrode active material disclosed herein may contain one, two or more other species of elements as an additional constitutive element M (additive element). As such additional element M, any element belonging to the periodic table group 1 (alkali metals such as sodium), group 2 (alkali earth metals such as magnesium and calcium), group 4 (transition metals such as titanium and zirconium), group 6 (transition metals such as chromium and tungsten), group 8 (transition metals such as iron), group 13 (metalloid element boron or metals such as aluminum) and group 17 (halogens such as fluorine) can be included. As typical example, W, Cr, Mo, Zr, Mg, Ca, Na, Fe, Zn, Si, Sn, Al, B and F. are illustrative. Setting the total content of these additional constitutive elements M to 20 mol% or lower is adequate, and a proportion of 10 mol% or lower is desirable.

In one embodiment of the invention, the positive electrode active material may have a composition (average composition) represented by the following general formula (I):

Li₁₊ₓNi_{y}Co_{z}Mn_{(1-y-z)}M_{γ}O₂ (I)

In formula (I), x may be a real number satisfying 0 ≤ x ≤ 0.2, y may be a real number satisfying 0.1 < y < 0.9. z may be a real number satisfying 0.1 < z < 0.4. γ may be 0 ≤ γ ≤ 0.03. M may be one species or two or more species of element selected from the group consisting of Zr, Mo, W, Mg, Ca, Na, Fe, Cr, Zn, Si, Sn, Al, B and F. In the chemical formula representing herein a lithium transition metal oxide of a lamellar structure, while the composition ratio of O (oxygen) is indicated as 2 for convenience, this number is not to be interpreted strictly and may allow for more or less variation in the composition (contained in a range of typically 1.95 or greater but 2.05 or less).

### <Production of positive electrode active material>

In the following, a positive electrode active material production method according to one embodiment of the invention will be described, taking as the main example the production of a positive electrode active material of a composition in which the lithium transition metal oxide is LNCM oxide and contains tungsten (W) as the additional metal element M; however, the invention is not to be limited to such a concrete aspect.

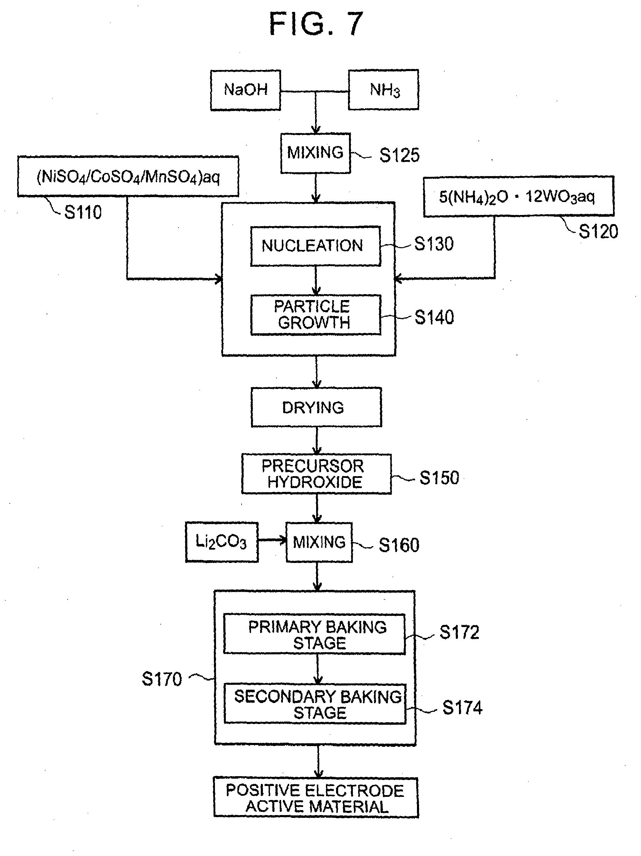

The positive electrode active material disclosed herein can be obtained by a precursor hydroxide preparation step for preparing a precursor hydroxide that contains at least a metal element M_{T} (for instance, a step in which preparation is by a wet method where the precursor hydroxide is generated from a reaction solution containing M_{T}), a mixing step for mixing the precursor hydroxide and a lithium compound (a compound that may be a lithium source; for instance, lithium salts such as Li₂CO₃ and LiOH) to prepare an unbaked mixture, and a baking step for baking the mixture to obtain the positive electrode active material. In addition, preferably, grinding the baked product obtained after such baking step and performing sieve-separation as necessary to adjust the particle size of the positive electrode active material is desirable. In the following, each step will be described in detail while referring to FIG. 7.

### <Aqueous solution aq_{A}>

The positive electrode active material production method according to an embodiment of the invention includes preparing an aqueous solution (typically an aqueous solution that is acidic, that is to say, less than pH 7) aq_{A} that contains a metal element M_{T} (here, Ni, Co and Mn) (Step S110). In one preferred mode, the aqueous solution aq_{A} is a composition that does not contain W substantially. The ratio of the amount of each metal element contained in the aqueous solution aq_{A} can be adjusted suitably according to the composition of the targeted positive electrode active material. For instance, molar ratios of Ni, Co and Mn can be set to be roughly on the same order as the molar ratios of these elements in the positive electrode active material. The aqueous solution aq_{A}, may be one species of aqueous solution that contains all of M_{T}, or two or more species of aqueous solution with different compositions. For instance, two species, an aqueous solution aq_{A1} that contains only Ni as M_{T} and an aqueous solution aq_{A2} that contains only Co and Mn as M_{T}, may be used as the aq_{A}. As one preferred mode, a mode using one species of aqueous solution that contains all of M_{T} may be pointed as an example. Such a mode may be adopted preferably from such points of view as avoiding complexation of the production devices and ease of control of production conditions.

The aqueous solution aq_{A} can be prepared for instance by dissolving respectively predetermined amounts of suitable Ni compound, Co compound and Mn compound in a aqueous solvent. Salts of each metal (that is to say, Ni salt, Co salt and Mn salt) can be used preferably as these metal compounds. The order in which these metal salts are added to the aqueous solvent is not limited in particular. In addition, the aqueous solution aq_{A} may be prepared by mixing a portion or all of the metals in the morphology of an aqueous solution. For instance, an aqueous solution that contains an Mn salt may be mixed into an aqueous solution that contains an Ni salt and a Co salt. It suffices to choose each anion in these metal salts in such a way that the salts are of the desired water-solubility. For instance, they may be a sulfate ion, a nitrate ion, a chloride ion, a carbonate ion, a hydroxide ion or the like. Anions of these metal salts may be entirely or partially the same, or may be different from one another. In FIG. 7, an example that uses sulfates of each metal are shown. For the concentration of the aqueous solution aq_{A}, for instance, the total of M_{T} (here, Ni, Co and Mn) can be set to on the order of 1 mol/L to 2.2 mol/L.

### <Aqueous solution aq_{B}>

The positive electrode active material production method according to one embodiment of the invention includes, in addition, preparing an aqueous solution aq_{B} that contains W (Step S120). The aqueous solution aq_{B}, typically, is a composition that does not contain M_{T} substantially (refers to these metal elements being at least not intentionally included and contamination may be allowed as unavoidable impurities or the like). For instance, an aqueous solution aq_{B} that contains substantially W only as metal element may be used preferably. The aqueous solution aq_{B} can be prepared similarly to the aqueous solution aq_{A} by dissolving a predetermined amount of W compound into an aqueous solvent. Various species of W salts can be used as the W compound. In one preferred mode, a salt of tungstic acid (oxo acid with W as the main element) is used. The W salt may be a solvate such as a hydrate. Cations in the W salts can be selected in such a way that the salts become water-soluble and may be, for instance, an ammonium ion, a sodium ion, a potassium ion or the like. As an example of W salt that may be used preferably, ammonium paratungstate (5(NH₄)₂O·12WO₃) may be cited. The concentration of W in the aqueous solution aq_{B} can be, for instance, on the order of 0.01 mol/L to 1 mol/L on the base of the W element.

The aqueous solvent used in the preparation of the aqueous solutions aq_{A} and aq_{B} is typically water and may be a mixed solvent in which water is the main component. As other solvents than water that constitute this mixed solvent, organic solvents (lower alcohols or the like) that may mix with water homogeneously can be used. In one preferred mode, water is used as the aqueous solvent. Depending on the solubility of each salt metal compound that is used, an aqueous solvent that contains a reagent (acid, base or the like) for increasing solubility may be used.

### <Alkaline aqueous solution>

In the positive electrode active material production method disclosed herein, an aqueous solution aq_{A} that contains M_{T} and an aqueous solution aq_{B} that contains W are prepared as separate aqueous solutions, and, aq_{A} and aq_{B} are mixed under alkaline conditions (that is to say, under conditions where the pH exceeds 7). Then, a hydroxide that contains M_{T} and W (hereafter referred to sometimes as "transition metal hydroxide" or " precursor hydroxide") is deposited from this mixed solution (hydroxide generation step).

In order to realize such alkaline conditions, a method according to an embodiment of the invention may include preparing an alkaline aqueous solution aq_{C}. This alkaline aqueous solution aq_{C}, typically, is an aqueous solution in which an alkali agent (compound with the effect of tilting the liquid property to the alkaline side) has been dissolved in an aqueous solvent. Any among strong bases (for instance, alkaline metal hydroxides such as sodium hydroxide and potassium hydroxide) and weak bases (ammonia, amine or the like) can be used as the alkali agent. The use of an alkaline aqueous solution aq_{C} that contains at least ammonia is desirable. An alkaline aqueous solution aq_{C} that contains both a weak base and a strong base can also be used. For instance, an alkaline aqueous solution aq_{C} that contains ammonia and sodium hydroxide may be used preferably. A plurality of alkaline aqueous solutions with different compositions (for instance, the two species of ammonia water and sodium hydroxide aqueous solution) can be used, either mixed before hand (Step S125), or, each as an independent solution (typically, supplied to the reaction vessel).

### <Nucleation stage>

In one embodiment of the invention, the hydroxide generation step includes a stage in which a nucleus of the transition metal hydroxide is deposited from the mixed solution that contains the aq_{A} and aq_{B} (nucleation stage), and a stage in which the nucleus is grown (particle growth stage). The nucleation stage and the particle growth stage are both performed in the presence of ammonia. It is particularly desirable to carry out at least the particle growth stage while the ammonia concentration in the solution is being controlled (for instance, while being controlled at a predetermined value or lower). In addition, the particle growth stage is preferably conducted at a lower pH than the pH in the nucleation stage, and under alkaline conditions.

The nucleation stage (Step S130) can be conducted preferably in a mode whereby, for instance, an alkaline aqueous solution with an initial pH of on the order of 11.0 to 14.0 (typically 11.5 to 12.5, for instance around 12.0) is readied inside a reaction tank, and while maintaining this initial pH, an aqueous solution aq_{A} and an aqueous solution aq_{B} are supplied to the reaction tank at an appropriate rate and stirred. In so doing, in order to maintain the initial pH, additionally supplying an alkaline aqueous solution to the reaction tank, as necessary, is adequate.

In the nucleation stage, depositing multiple nuclei from the mixed solution within a short time (for instance, nearly simultaneously) is desirable from the point of view that hollow active material particles with little variations are obtained readily (for instance, the proportion of the number of particles with particle sizes, particle structures, or the like, that are considerably away from the average is small). For instance, it is adequate to cause the nuclei to deposit from a solution in which the transition metal hydroxide is in a supersaturated state (for instance, by bringing the solution to reach a critical supersaturation degree). In order to realize such a deposition mode suitably, it is advantageous to carry out the nucleation stage under conditions of pH 12.0 or above (typically pH 12.0 or above but 14.0 or below, for instance, pH 12.2 or above but 13.0 or below).

In the mode that uses an alkaline aqueous solution containing ammonia in the nucleation stage, while the ammonia concentration in the reaction solution is not limited in particular, in general, about 25 g/L or lower is suitable, and for instance, on the order of 3 g/L to 25 g/L (preferably 10 g/L to 25 g/L) is adequate. The pH and the ammonia concentration can be adjusted by appropriately balancing the amount of ammonia water used and the amount of other alkali agents used. The amounts used may be assessed also as, for instance, supply rate to the reaction system. As the "other alkali agents", for instance, strong bases such as sodium hydroxide and potassium hydroxide can be used typically in the morphologies of aqueous solutions. In one preferred mode, sodium hydroxide is used as the other alkali agent. Herein, the value of the pH is the pH value on the basis of 25°C solution temperature. In addition, the ammonia concentration of the reaction solution can be measured, for instance, by the ion chromatography method, the ion electrode method or the like. Commercially available ion chromatography apparatus, electrode ammonia meter or the like can be used for the measurements.

### <Particle growth stage>

In the particle growth stage (Step S140), the nuclei of transition metal hydroxide deposited in the nucleation stage (typically particle-shaped) are grown preferably under alkaline conditions in a lower pH region than the nucleation stage. For instance, particle-growth at lower than pH 12.0 (typically pH 10.0 or above but 12.0 or below, preferably pH 10.0 or above but 11.8 or below, for instance, pH 11.0 or above but 11.8 or below) is adequate. A transition metal hydroxide particle (precursor hydroxide particle) obtained via this particle-growth stage, typically, has a lower density inside the particle compared to the density of the external surface portion of the particle. In the mode that uses an alkaline aqueous solution containing ammonia, in order to obtain a transition metal hydroxide particle of such a structure stably, it is essential that the in-solution ammonia concentration does not become too high (is kept low) in the particle growth stage. With the above, the rate of deposition of the transition metal hydroxide becomes rapid, which may generate effectively a precursor hydroxide that is suitable for the formation of an active material particle of a hollow structure (preferably a pierced hollow structure). The rate of deposition of the transition metal hydroxide may be assessed, for instance, by evaluating, with respect to the total number of moles of metal ions (for instance, the ions of M_{T} and W) supplied to the reaction solution, the shift in the total number of moles of the metal ions (total ion concentration) in the liquid phase of the reaction solution.

The ammonia concentration in the particle growth stage can be, for instance 25 g/L or less, in general 20 g/L or less being adequate, and preferably 15 g/L or less and more preferably 10 g/L or less (for instance 8 g/L or less). While the lower limit of the in-solution ammonia concentration is not limited in particular, from such points of view as the ease of managing manufacturing conditions, quality stability, productivity and the mechanical strength (for instance hardness) of the obtained active material particle, in general, an ammonia concentration of roughly 1 g/L or more (preferably 3 g/L or more) is adequate. The pH and ammonia concentration in the particle growth stage can be adjusted in a similar manner to the nucleation stage. The in-solution ammonia concentration in the particle growth stage may be roughly on the same order as the ammonia concentration in the nucleation stage or may be lower than the ammonia concentration in the nucleation stage. The in-solution ammonia concentration in the particle growth stage may be controlled to be lower than the ammonia concentration in the nucleation stage (a concentration of typically 75% or lower, for instance, 50% or lower).

In implementing the technique disclosed herein, while there is no need to elucidate the reason for a precursor hydroxide that is appropriate for forming an active material of a hollow structure (preferably, a pierced hollow structure) to be obtained by keeping the ammonia concentration low in the particle growth stage in the above manner, for instance, the following can be considered. That is to say, in the above mixed solution (reaction solution), for instance, the following equilibrium reactions are occurring, M₁ in formulas 1 and 2 below is a transition metal (for instance Ni).
[C1]

M₁²⁺ + 6 N H₃ ⇄ [M₁ (NH₃)₆]²⁺ (1)

M₁²⁺ + 2 O H⁻ ⇄ M₁ (OH)₂ (2)

Here, when the ammonia concentration in the reaction solution is lowered, the equilibrium of formula 1 moves to the left, raising the concentration of M₁²⁺. Therefore, the equilibrium of formula 2 moves to the right, promoting the generation of M₁(OH)₂. In other words, M₁(OH)₂ becomes susceptible to deposition. In such a situation where M₁(OH)₂ is susceptible to deposition, the deposition of M₁(OH)₂ occurs mainly in the vicinity of the external surface of a transition metal hydroxide that has already deposited (a nucleus generated in the nucleation stage or a transition metal hydroxide particle in the course of a particle growth stage), and M₁(OH)₂ depositing on the inside of the deposit becomes fewer. It is inferred that, as a result of this, a precursor hydroxide particle of a structure in which the internal density is low compared to the density of the external surface portion is formed (a transition metal hydroxide particle that is appropriate for forming an active material particle of a hollow structure, which may also be understood as a precursor particle of the active material particle).

When mixed with a lithium compound and baked, a precursor hydroxide particle of such a structure becomes sintered in such a way that among the particle, the interior where the density is small is incorporated into a portion proximal to the external surface where the density is high and the mechanical strength is strong. Therefore, the shell portion 115 of the positive electrode active material particle 110 is formed at the same time as a large hollow portion 116 is formed, as shown in FIG. 6. In addition, when a crystal grows during sintering, the through-hole 118 is formed in a portion of the shell portion 115, passing through the shell portion 115. This is thought to form a positive electrode active material particle 110 having a shell portion 115, a hollow portion 116 and a through-hole 118. Meanwhile, it is thought that, if the ammonia concentration in the particle growth stage is too high, since the deposition rate of M₁(OH)₂ becomes small, the difference between the amount of deposition in the vicinity of the external surface and the amount of deposition on the inside becomes small and the precursor hydroxide particle of the above structure tends to be difficult to form.

In addition, by mixing and baking in this way a precursor hydroxide particle, which has been generated by preparing, as separate aqueous solutions, an aqueous solution aq_{A} that contains M_{T} and an aqueous solution aq_{B} that contains W and mixing these under alkaline conditions, and a lithium compound, a positive electrode active material may be formed effectively, in which W is present, offset towards the surface of the primary particle. This is believed to be due to the aqueous solution aq_{A} that contains M_{T} being neutralized and then mixed with W, whereby the hydroxide that contains M_{T} starts depositing first and W becomes prone to depositing by contacting the deposit. Such a precursor hydroxide particle effectively suppresses crystal growth in the c-axis direction during baking and is suited for adjusting the half-height width ratio (A/B) to the above-mentioned preferred range.

In each of the nucleation stage and the particle growth stage, the temperature of the reaction solution is preferably controlled to an approximately constant temperature (for instance, prescribed temperature ±1°C) in a range of about 20°C to 60°C (for instance, 30°C to 50°C). The temperature of the reaction solution may be on the same order between the nucleation stage and the particle growth stage. The reaction solution and the atmosphere inside the reaction tank are preferably maintained in a non-oxidizing atmosphere (for instance, a non-oxidizing atmosphere in which the oxygen concentration is roughly 20% or lower and preferably 10% or lower) through the nucleation stage and the particle growth stage. Through the nucleation stage and the particle growth stage, the total number of moles of M_{T} ions, E_{A} ions and E_{B} ions contained in a unit volume of reaction solution (total ion concentration) can be for instance about 0.5 mol/L to 2.5 mol/L and in general about 1 mol/L to 2.2 mol/L is desirable. So that such concentrations are maintained, supplementing (typically continuously supplying) the aqueous solutions aq_{A} and aq_{B} according to the rate of deposition of the transition metal hydroxide is adequate,

Through the nucleation stage and the particle growth stage, the number of moles of W ions contained in the reaction solution (ion concentration) can be, for instance about 0.01 mol/L to 1 mol/L. So that such ion concentration is maintained, supplementing (typically continuously supplying) the transition metal solution according to the speed of deposition of the transition metal hydroxide is adequate. The amounts of Ni ions, Co ions, Mn ions and W ions contained in the reaction solution are preferably in amount ratios roughly corresponding to the composition of the target active material particle (that is to say, the molar ratios of Ni, Co, Mn and W contained in the active material particle).

The time during which the deposition reaction of the precursor hydroxide continues can be set suitably according to the particle size (typically, the average particle size) of the target positive electrode active material. As a trend, in order to obtain a positive electrode active material with larger particle sizes it is adequate to extend the reaction time. After the end of crystallization, it is adequate that the transition metal hydroxide particle (here, a complex hydroxide particle containing Ni, Co, Mn and W) generated in this manner is separated from the reaction solution, washed (typically water-washed) and dried to be prepared into a particle-shape having the desired particle size (Step S150).

### <Mixing step>

According to an embodiment of the invention, the positive electrode active material production method may contain a mixing step for mixing the precursor hydroxide and a lithium compound (lithium source) (Step S160). As the lithium compound, an oxide containing lithium may be used or a compound that may become an oxide by heat (carbonate salt, nitrate salt, sulfate salt, oxalate salt, hydroxide salt, ammonium salt, sodium salt, or the like, of lithium) may be used. As preferred lithium compounds, lithium carbonate and lithium hydroxide can be indicated as examples. The lithium compound can be used alone as one species only or by combining two or more species. In a positive electrode active material production method relating one embodiment of the invention, lithium carbonate (for instance alone) is used as the lithium compound. The mixing ratio of the precursor hydroxide and the lithium compound can be determined in such a way that the desired molar ratio is realized in the target positive electrode active material. For instance, it is adequate to mix the precursor hydroxide and the lithium compound so that the molar ratio between lithium and the other metal elements is on the same order as the molar ratio in the positive electrode active material.

### <Baking step>

Then, the mixture is baked to generate a lithium transition metal oxide (Step S170). This baking step is preferably carried out in an oxidizing atmosphere (for instance, air or an atmosphere that is more oxygen-rich than air). The baking temperature in this baking step can be for instance 700°C to 1,100°C. It is preferably carried out in such a way that the maximum baking temperature is 800°C or higher (preferably 800°C to 1,100°C, for instance 800°C to 1,050°C). With a maximum baking temperature in this range, the sintering reaction of the primary particle of lithium transition metal oxide (preferably, an Ni-containing Li oxide; here, LiNiCoMn oxide) can proceed appropriately. The baking step can be conducted under conditions it lasts less than 20 hours (more preferably, 15 hours or less, for instance, 13 hours or less). Such conditions allow the positive electrode active material of a hollow structure disclosed here to be manufactured with better productivity. While the time at the lower limit is not restricted in particular as long as a positive electrode active material that meets the desired characteristics is obtained, in general, it is 2 hours or more (for instance, 5 hours or more).

In one embodiment of the invention, included are a primary baking stage in which baking is at a maximum baking temperature T1 (Step S172) and a secondary baking stage in which baking is at a maximum baking temperature T2 that is lower than the maximum baking temperature T1 (that is to say, T1 > T2) (Step S174). Baking the mixture based on such multi-stage baking schedule allows the positive electrode active material of a hollow structure disclosed herein to be formed efficiently.

### <Primary baking stage>

The primary baking stage (Step S172) may be understood as a stage in which, mainly, the unbaked mixture is heated to cause the precursor hydroxide and the lithium compound to react. The maximum baking temperature T1 in this primary baking stage can be a temperature region in which the sintering reaction of the target lithium transition metal oxide may proceed and is a temperature region at the melting point of the lithium transition metal oxide or lower, which can be determined for instance within the range of 800°C to 1,000°C. If the maximum baking temperature T1 is above 1,000°C, the growth (hypertrophy) of the primary particle proceeds noticeably, which may give rise to a decrease in the degree of hollowness (and by extension a decrease in battery capabilities) or the like. In general, establishing the maximum baking temperature T1 in the range of 700°C to 950°C (for instance, 800°C to 950°C) is adequate. In addition, the time t1 of retention at the maximum baking temperature T1 can be for instance 0.5 hours to 12 hours, and in general 1 hour to 12 hours (for instance 2 hours to 10 hours) is desirable. If the retention time t1 is too short, crystal growth becomes insufficient or non-reacted lithium compound remains abundantly. If the retention time t1 is too long, the crystal grows excessively during sintering, and the half-height width ratio (A/B) sometimes becomes excessively larger than the preferred value mentioned above. In addition, the time required for the baking step becomes longer, facilitating a decrease in productivity for the positive electrode active material. From the point of view of productivity for the positive electrode active material, retention time t1 is preferably 8 hours or less (more preferably 7 hours or less, for instance, 6 hours or less).

### <Secondary baking stage>

The secondary baking stage (Step S174) may be understood as a stage in which, mainly, while quelling a further crystal growth of the resultings obtained by the primary baking stage, the amount of Li-CO₃ compound (typically, a lithium compound that is not contained within the composition of lithium transition metal oxide, that is to say, an extra-compositional lithium compound) that may be present within the resultings is decreased. This Li-CO₃ compound may originate from the lithium compounds (Li₂CO₃, LiOH or the like) used in the preparation step of the positive electrode active material. For instance, when heating (baking) a mixture between the transition metal hydroxide as the precursor of the positive electrode active material and the lithium compound to generate a lithium transition metal oxide, it may be the surplus portion (portion used in excess with respect to the amount of metal element M), the non-reacted portion or the secondary reaction products of the lithium compound, or an Li-CO₃ compound generated when these reacted with CO₂ or the like in the atmosphere (for instance in the air). The reduction in the amounts of extra-compositional lithium compound may be realized by the Li contained in the compound being integrated (absorbed) into a lithium transition metal oxide (for instance, within a layer such as transition metal layer and lithium layer). The maximum baking temperature T2 in this secondary baking stage can be determined within a range of for instance 600°C to 850°C (however, T1 > T2), and in general, a range of 650°C to 800°C (for instance, 700°C to 800°C) is adequate. In addition, the time of retention (retention time) t2 at the maximum baking temperature T2 can be, for instance 0.5 hours to 12 hours, and in general, 1 hour to 12 hours (for instance 2 hours to 10 hours) is desirable. From the point of view of productivity for the positive electrode active material, it is desirable that the retention time t2 is 8 hours or less (more preferably 6 hours or less, for instance 5 hours or less).

The primary baking stage and the secondary baking stage may be carried out continuously (for instance, the unbaked mixture is retained at the maximum baking temperature T1 of the primary baking stage, followed by the temperature being raised to the maximum baking temperature T2 of the secondary baking stage and then the mixture is retained at the temperature T2), or, the mixture is retained at the maximum baking temperature T1 of the primary baking stage, momentarily cooled (for instance, cooled to ordinary temperature), grinding and sieve-separation are carried out as necessary, and then the mixture is subjected to the secondary baking stage. Between the maximum baking temperature T1 of the primary baking stage and the maximum baking temperature T2 of the secondary baking stage, establishing a temperature difference of 50°C or greater

(typically 100°C or greater, for instance 150°C or greater) is adequate. Such a mode allows both the primary and the secondary baking stages to achieve their respective roles more properly. While the baking step may as necessary include a baking stage other than the primary baking stage and the secondary baking stage, it is desirable that after the end of the primary baking stage, there is no stage in which the mixture is retained at the maximum baking temperature T1 or at a higher temperature for 0.5 hours or more continuously. The reason is that there is a possibility for the stage of promoting the growth of the crystal and the half-height width ratio (A/B) becomes too large.

The amount of Li-CO₃ compound (typically lithium carbonate (Li₂CO₃)) contained in the positive electrode active material produced in the manner described above is preferably 0.2 mass% or lower (typically 0.05 mass% or greater but 0.20 mass% or lower). By holding the Li-CO₃ compound content of the positive electrode active material low, storage and release of lithium ions become smooth, allowing the output characteristics (in particular output characteristics in low SOC regions) to be improved all the more.

The positive electrode active material production method may be applied preferably in particular when the transition metal solution contains Ni. When the transition metal solution contains Ni, particles of transition metal hydroxide are generated in the morphology of a secondary particle in which a plurality of microscopic primary particles are aggregated when the transition metal hydroxide deposits from the solution. In addition, in the temperature range at baking time, the crystals grow while roughly maintaining the shapes of the primary particles of transition metal hydroxide.

### <Negative electrode active material>

The negative electrode active material disclosed herein is formed of a carbon material. A particle-shaped carbon material (carbon particle), which has at least partially a graphite structure (layer structure), can be used for the carbon material. Any carbon material among those with so-called graphites, those with hard carbons, those with soft carbons, and those having a structure combining these may also be used adequately. In particular among these, a graphite particle (may be any of a natural graphite and an artificial graphite), which allows a high energy density to be obtained, can be used preferably. Artificial graphite may be produced by graphitizing carbon sources such as petroleum cokes and coal cokes. Graphitization of a carbon source can be conducted by the conventional method and can be obtained, for instance, under non-oxidizing atmosphere, by calcinating at about 1,200°C to 1,500°C for 2 hours to 3 hours and then actually baking at about 2,200°C to 3,000°C (typically, 2,300°C to 2,600°C) for 1 hour or more (for instance, on the order of 1 hour to 6 hours) a carbon source.

In addition, a carbon particle of a morphology in which the graphite particle serving as the core is coated (covered) with an amorphous carbon material is also suitable. Since such a carbon particle contains a graphite particle as the core, it may exhibit a high energy density. In addition, graphite particles generally provoke a decrease in the capacity and an increase in the resistance of a battery by the edge portions (typically, the end portions of the hexagonal network plane (basal plane) of a graphite) reacting with a non-aqueous electrolytic solution (typically, a non-aqueous solvent contained in the electrolytic solution). However, since this carbon particle has a surface coated with an amorphous carbon material, reactivity with the non-aqueous electrolytic solution is held relatively low. Therefore, in a lithium secondary battery provided with such a carbon particle as the negative electrode active material, an increase in irreversible capacity or resistance is suppressed, allowing a high durability to be exhibited. A carbon particle of such morphology can be prepared, for instance, by generic gas phase method (dry process) or liquid phase method (wet process). This allows a carbon material of low reactivity with electrolytic solution to be conferred suitably to a portion of the graphite particle (typically, a portion of the external surface). As an example, the particle may be prepared by mixing in a suitable solvent a graphite particle that is to be the core and a carbonizable material such as pitch or tar that is to be a precursor of amorphous carbon, attaching the carbon material to the surface of the graphite particle, and baking this at a temperature to an extent where graphitization of the precursor is not promoted to sinter the carbon material attached on the surface. The proportions for mixing the graphite particle and the carbon material can be determined adequately according to the species and properties (for instance, average particle size) of the carbon material used. In addition, the baking temperature can be, for instance, 500°C to 1,500°C (typically 800°C to 1,300°C).

### <Kr adsorption amount of the negative electrode active material>

The Kr adsorption amount of the negative electrode active material (specific surface area) is 3.5 m²/g or greater but 4 m²/g or less. For Kr, used here as the adsorbate, the adsorption cross-section is about 0.2 nm², which is approximately on the same order as the effective cross-section of a lithium ion (cross-section of a lithium ion in the solvated state). Thus, it is suitable for evaluating the adsorption amount of solvated lithium ion. Furthermore, since the saturated vapor pressure for Kr is low compared to nitrogen, argon or the like, which are used as adsorbates in generic adsorption measurements, in cases where the adsorption amount is small (for instance, when the Kr adsorption amount is 5 m²/g or less), it can also be measured with good accuracy. Since a negative electrode active material in which the Kr adsorption amount is 3.5 m²/g or greater adequately holds a surface area that may physically adsorb a lithium ion, lithium ion may be stored adequately at high load (for instance, large current charging time), deposition of lithium and the accompanying decrease in battery capacity may be suppressed. Thus, a lithium secondary battery provided with the negative electrode active material may exhibit excellent input characteristics. In addition, with a Kr adsorption amount of 4 m²/g or less, decomposition of the non-aqueous electrolytic solution can be suppressed, allowing high durability to be maintained. Adjustment of the Kr adsorption amount can be carried out, for instance, by the selection of the carbon material species or the method of covering the surface of the carbon material with amorphous carbon as described above. More concretely, the Kr adsorption amount may be adjusted, for instance, by varying the baking temperature when coating the surface of the graphite particle with the amorphous carbon. Alternatively, adjustment is also possible by suitably carrying out grinding processing or sieve-separation. Such adjustment methods can be conducted alone or in suitable combinations.

### <Oil absorption amount of the negative electrode active material>

The oil absorption amount of the negative electrode active material is typically 40 (ml/100 g) or more but 70 (ml/100 g) or less and preferably 50 (ml/100 g) or more but 60 (ml/100 g) or less. Setting the oil absorption amount to 40 (ml/100 g) or more increases affinity for the non-aqueous electrolytic solution and allows the boundary surface resistance to be held low. Therefore, using such a negative electrode active material allows all the more higher battery capabilities (for instance, excellent output characteristics) to be exhibited, particularly in applications where charging and discharging at large current (rapid charging and discharging) are repeated. In addition, with an oil absorption amount of 70 (ml/100 g) or lower, coatability and binding ability (binding ability to the negative electrode collector) are excellent, and a thin negative electrode active material layer with little unevenness may be formed. The "oil absorption amount" can be determined in accordance with JIS K6217-4 (2008) "Carbon black for rubber industry -- Fundamental characteristics -- Part 4: Determination of dibutyl phthalate (DBP) oil absorption number". Here, linseed oil is used as the liquid reagent, instead of DBP. Concretely, linseed oil is instilled with a constant-speed burette onto the negative electrode active material particle to be measured, and the change in viscometric properties in so doing is measured with a torque sensor. Here, the added amount (ml) of the liquid reagent per unit weight (100 g) of the negative electrode active material particle, corresponding to a torque of 70% of the maximum torque generated, serves as the oil absorption amount (mL/100 g) of linseed oil.

### <Atomic ratio (O/C) of the negative electrode active material>

Regarding the affinity between the negative electrode active material and the electrolytic solution, it may also be assessed to some extent, for instance, by the atomic ratio (O/C) between the oxygen atom (O) and the carbon atom (C). The O/C for the negative electrode active material can be, for instance, 0.05 or greater but 1 or lower (typically, 0.1 or greater but 1 or lower, for instance, 0.2 or greater but 0.5 or lower). With a negative electrode active material in which O/C is 0.05 or greater, since functional groups having polarity (for instance, hydroxyl group, carboxyl group or the like) are present abundantly on the surface of the active material, affinity for the electrolytic solution is excellent. Thus, a lithium secondary battery provided with the negative electrode active material may exhibit all the more excellent output characteristics. In addition, setting O/C to 1 or lower can inhibit an excessive reaction with the electrolytic solution and reduce irreversible capacity. The value of this "O/C" can be calculated using values obtained by measuring the measurement subject by the method of X-ray photoelectron spectroscopy (XPS). More concretely, the oxygen atoms (O) and carbon atoms (C) present in the surface vicinity of the negative electrode active material particle are measured by XPS, and from the peak areas in the C_{IS} and O_{IS} spectra obtained, the concentrations of the O atoms and the C atoms are calculated. Then, the atomic ratio (O/C) can be determined by dividing the O atom concentration by the C atom concentration.

### <Particle size of the negative electrode active material>

The average particle size (secondary particle size) of the negative electrode active material can be, for instance, about 20 µm or less, and can be preferably 15 µm or less and more preferably 4 µm or greater but 10 µm or less. A negative electrode active material that satisfies the above particle size range may form within the active material layer containing the active material a suitable conductive route (conductive path). Therefore, with a lithium secondary battery in which such a negative electrode active material has been used, the battery capabilities (for instance, rated capacity and output characteristics) can be improved all the more. The average particle size of the negative electrode active material can be measured similarly to the average particle size (secondary particle size) of the positive electrode active material particle described above, using generic laser diffraction and light scattering methods.

### <Tapped density of the negative electrode active material>

The tapped density of the negative electrode active material is, for instance, 0.5 g/cm³ or greater (preferably 0.7 g/cm³ or greater) and can be 1.5 g/cm³ or lower (preferably 1.3 g/cm³ or lower, and more preferably 1.2 g/cm³ or lower). Setting the tapped density to 0.5 g/cm³ or greater allows the proportion of negative electrode active material contained in the negative electrode active material layer to be raised, that is to say, the battery capacity per unit volume (energy density) can be raised. In addition, by setting the tapped density to 1.5 g/cm³ or lower, since a suitable degree of void may be maintained within the negative electrode active material layer, the electrolytic solution perfuses readily, allowing the diffusive resistance of lithium ion within the active material layer to be kept low. Therefore, storage and release of lithium ions can be carried out efficiently, allowing the output characteristics (in particular output characteristics in low SOC regions) to be improved further. The tapped density of the negative electrode active material can be measured, for instance, by a method defined in JIS K1469, using a generic tapping density measurement apparatus. The Kr adsorption amount, oil absorption amount, O/C and tapped density described above are in a roughly correlated relationship, and when there are no differences in the raw materials and the production methods, in general, the larger the Kr adsorption amount, the higher the oil absorption amount and O/C tend to become, and conversely, the smaller the tapped density tends to become.

Hereafter, an embodiment of a lithium secondary battery (typically, a lithium ion secondary battery) will be described in detail, taking as example a lithium ion secondary battery with a constitution in which a rolled electrode body and a non-aqueous electrolytic solution are housed in a flat, rectangular shaped battery case. The invention is not intended to be limited to the embodiment disclosed here.

### <Lithium ion secondary battery>

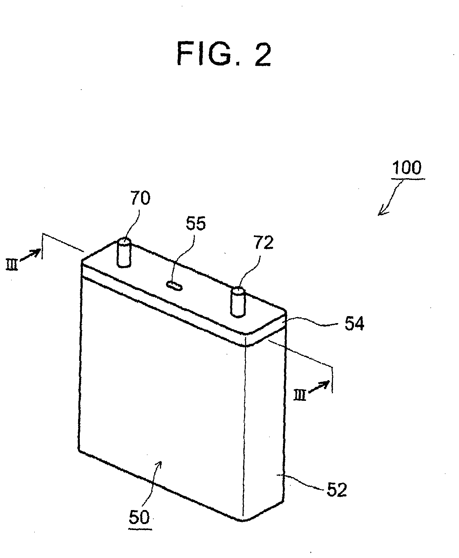

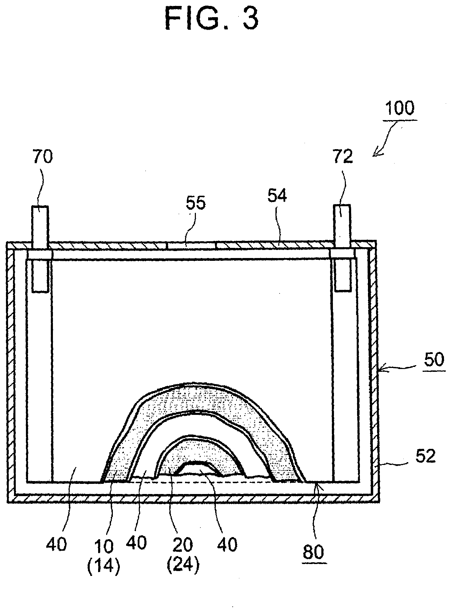

The lithium ion secondary battery according to the embodiment disclosed here has a constitution in which a rolled electrode body 80 is housed in a flat, rectangular parallelepipedal (rectangular) battery case 50 that is suited to the shape of the electrode body 80, as shown for instance in FIG. 2 and FIG. 3. This battery case 50 is provided with a flat, rectangular parallelepipedal (rectangular) battery case main body 52 of which the top end is open, and a lid body 54 that plugs this opening. On the top surface of the battery case 50 (that is to say, the lid body 54), a positive terminal 70 and a negative terminal 72 for external connection use are installed in such a way that portions of the terminals protrude from the lid body 54 in the outward direction of the battery. In addition, a safety valve 55 is provided on the lid body 54 for releasing out the gas that is generated inside the battery case. The lithium ion secondary battery 100 of such a constitution can be constructed, for instance, as follows: the electrode body 80 is accommodated inside from the opening of the battery case main body 52, and the opening of the battery case main body 52 is fitted with the lid body 54; thereafter, a non-aqueous electrolytic solution is injected from an electrolytic solution injection port (not shown) provided on the lid body 54; and next, the injection port is plugged.

As shown in FIG. 3 to FIG. 5, the electrode body 80 is formed in the following manner: a positive electrode sheet 10, in which a positive electrode active material layer 14 containing a positive electrode active material is held by a positive electrode collector 12 in continuous sheet-form, and a negative electrode sheet 20, in which a negative electrode active material layer 24 containing a negative electrode active material is held by a negative electrode collector 22 in continuous sheet-form, are superposed and rolled; and the obtained roll is squeezed by being pressed from a direction perpendicular to a roll-axis WL to be formed into a flat shape. Typically positioned between the positive electrode active material layer 14 and the negative electrode active material layer 24 is an insulation layer that avoids a direct contact between both parties. In one embodiment of the invention, two sheets of separator 40 in continuous sheet-form are used as the insulation layer. For instance, electrode body 80 is constituted by rolling these separators 40 together with the positive electrode sheet 10 and the negative electrode sheet 20. The insulation layer may be coated directly on the surface of the positive electrode active material layer 14 and/or the negative electrode active material layer 24.

The positive electrode sheet 10 is formed in such a way that, at one end along the lengthwise direction thereof, the positive electrode active material layer 14 is not provided (or has been removed), so as to expose the positive electrode collector 12. Similarly, the negative electrode sheet 20 is formed in such a way that, at one end along the lengthwise direction thereof, the negative electrode active material layer 24 is not provided (or has been removed), so as to expose the negative electrode collector 22. Then, joined are a positive terminal 70 to the exposed end portion of the positive electrode collector 12 and a negative terminal 72 to the exposed end portion of the negative electrode collector 22, respectively. Joining of the positive and negative terminals 70 and 72 to the positive and the negative electrode collectors 12 and 22 can be carried out, for instance, by ultrasonic welding, resistance welding, or the like.

### <Positive electrode sheet 10>

The positive electrode sheet 10 of the lithium secondary battery disclosed here is provided with a positive electrode collector 12 and, formed over the positive electrode collector, a positive electrode active material layer 14 that contains at least a positive electrode active material. The positive electrode active material layer 14 contains any positive electrode active material disclosed herein and a conducting material for raising electric conductivity, and these are bonded firmly over the positive electrode collector 12 by a binder (binding agent). The positive electrode sheet 10 can be produced preferably by conferring to the positive electrode collector 12 a composition in paste-form or in slurry-form in which a positive electrode active material and, used as necessary, a conducting material, a binder or the like, are dispersed in a suitable solvent (dispersion solution for positive electrode active material layer formation), and drying the composition. Any among aqueous solvents and organic solvents can be used as the solvent and, for instance, N-methyl-2-pyrrolidone (NMP) can be used.

Preferably used as the positive electrode collector 12 is an electrically conductive member made of a metal of satisfactory electrical conductivity (for instance aluminum, nickel, titanium, stainless steel or the like). While the shape of the collector is not limited in particular, since it differs depending on the shape, or the like, of the battery being constructed, for instance, rods, plates, foils, nets or the like, can be used. In a battery provided with a rolled electrode body, foils are used mainly. While the thickness of the foil-shaped collector is not limited in particular restriction, from the balance between the capacity density of the battery and the strength of the collector, those on the order of 5 µm to 50 µm (more preferably, 8 µm to 30 µm) can be used.

As the conducting material, typically, a carbon material can be used. More concretely, it may be, for instance, one species, two species or more selected from carbon materials such as a various carbon blacks (for instance, acetylene black, furnace black, Ketchen black, channel black, lamp black, thermal black), cokes, activated charcoals, graphites (natural graphite and artificial graphite), carbon fibers (PAN series carbon fibers and pitch series carbon fibers), carbon nanotubes, fullerenes and graphenes. Among them, carbon black (typically, acetylene black) can be used preferably.

It is possible to use as the binder a polymer that can be dissolved or dispersed in the solvent to be used. For instance, in a positive electrode combination composition that uses an aqueous solvent, cellulose series polymers such as carboxymethylcellulose (CMC; typically, a sodium salt) and hydroxypropylmethylcellulose (HPMC); fluorine series resins such as polyvinyl alcohol (PVA) and polytetrafluoroethylene (PTFE); and rubbers such as styrene butadiene rubber (SBR) can be adopted preferably. In addition, in a positive electrode combination composition that uses a non-aqueous solvent, polyvinylidene fluoride (PVdF), polyvinylidene chloride (PVdC) or the like, can be adopted preferably.

For the proportion that the positive electrode active material occupies in the entirety of the positive electrode active material layer, about 50 mass% or greater (typically, 50 mass% to 95 mass%) is adequate and in general, about 70 mass% to 95 mass% is desirable. When a conducting material is used, the proportion that the conducting material occupies in the entirety of the positive electrode active material layer can be, for instance, about 2 mass% to 20 mass%, and in general about 2 mass% to 15 mass% is desirable. When a binder is used, the proportion that the binder occupies in the entirety of the positive electrode active material layer can be, for instance, about 0.5 mass% to 10 mass%, and in general about 1 mass% to 5 mass% is desirable.

Drying of the dispersion solution conferred to the positive electrode collector 12 can be carried out as necessary under heating. After drying, the entirety may be pressed as necessary. It is adequate that the mass of the positive electrode active material layer 14 provided per unit area of the positive electrode collector 12 (in a constitution having the positive electrode active material layer 14 on both sides of the positive electrode collector 12, the total mass from both sides) is for instance on the order of 5 mg/cm² to 40 mg/cm² (typically, 10 mg/cm² to 20 mg/cm²). The density of the positive electrode active material layer 14 can be, for instance, on the order of 1.5 g/cm³ to 4 g/cm³ (typically, 1.8 g/cm³ to 3 g/cm³). Setting the density of the positive electrode active material layer in the above range allows the diffusive resistance of lithium ions to be kept low while maintaining the desired capacity. Therefore, the output characteristics (in particular output characteristics in low SOC regions) and the energy density of the lithium secondary battery can be combined at even higher levels.

### <Negative electrode sheet 20>

The negative electrode sheet 20 of the lithium secondary battery disclosed here is provided with a negative electrode collector 22 and, formed over the negative electrode collector, a negative electrode active material layer 24 that contains at least a negative electrode active material. The negative electrode active material layer 24 contains any negative electrode active material disclosed herein and is bonded firmly over the negative electrode collector 22 by a binder (binding agent). The negative electrode sheet 20 can be produced preferably by conferring to the negative electrode collector 22 a composition in paste-form or in slurry-form in which a negative electrode active material and, used as necessary, a binder or the like, are dispersed together in a suitable solvent (dispersion solution for negative electrode active material layer formation), and drying the composition. As the solvent, for instance, water can be used. Preferably used as the negative electrode collector 22 is an electrically conductive member made of a metal of satisfactory electrical conductivity (for instance, copper, nickel, titanium, stainless steel or the like). In addition, the shape of the negative electrode collector 22 may be similar to the shape of the positive electrode collector.

As binders, suitable ones can be selected from the polymer materials illustrative as binders for use with the positive electrode active material layer. Concretely, SBR, PVdF, PTFE or the like, can be given as examples. Aside from these, various additives such as dispersants and conducting materials can be use suitably.

For the proportion that the negative electrode active material occupies in the entirety of the negative electrode active material layer, about 50 mass% or greater is adequate, and 90 mass% to 99 mass% (for instance, 95 mass% to 99 mass%) is desirable. When a binder is used, the proportion that the negative electrode active material occupies in the entirety of the negative electrode active material layer can be, for instance, to about 1 mass% to 10 mass%, and in general, about 1 mass% to 5 mass% is adequate.

Drying of the dispersion solution conferred to the negative electrode collector 22 can be carried out as necessary under heating. After drying, the entirety may be pressed as necessary. It is adequate that the mass of the negative electrode active material layer 24 provided per unit surface area of the negative electrode collector 22 (in a constitution having the negative electrode active material layer 24 on both sides of the negative electrode collector 22, the total mass from both sides) is for instance on the order of 5 mg/cm² to 20 mg/cm² (typically, 5 mg/cm² to 10 mg/cm²). The density of the negative electrode active material layer 24 can be, for instance, on the order of 0.5 g/cm³ to 2 g/cm³ (typically, 1 g/cm³ to 1.5 g/cm³). Setting the density of the negative electrode active material layer in the above range allows the diffusive resistance of lithium ions to be kept low while maintaining the desired capacity. Therefore, the output characteristics (in particular output characteristics in low SOC regions) and the energy density of the lithium secondary battery can be combined at even higher levels.

### <Capacity ratio between the positive electrode and the negative electrode>

While not to be limited in particular, for the ratio (Cₐ/C_{c}) between the positive electrode capacity (C_{c}), which is calculated by the product of the theoretical capacity per unit mass of the positive electrode active material and the mass of the positive electrode active material, and the negative electrode capacity (Cₐ), which is calculated by the product of the theoretical capacity per unit mass of the negative electrode active material and the mass of the negative electrode active material, in general, for instance 1 to 2 is adequate, 1.5 to 1.9 is desirable and 1.7 to 1.9 is more desirable. The capacity proportion between the facing positive electrode and negative electrode may influence directly the battery capacity (or irreversible capacity) and energy density. If Cₐ/C_{c} is too small, depending on the conditions of use, or the like, of the battery (for instance rapid charging), may arise, such as metallic lithium deposits readily. Meanwhile, if Cₐ/C_{c} is too large, the energy density of the battery sometimes become prone to decreasing. Setting the capacity ratio between the facing positive and negative electrodes to the above range allows the deposition of lithium to be suppressed adequately while battery characteristics such as battery capacity and energy density are kept satisfactory.

### <Separator 40>

As the separator 40 intercalated between the positive electrode sheet 10 and the negative electrode sheet 20, a porous sheet, a non-woven fabric or the like that is made of a resin such as polyethylene (PE), polypropylene (PP), polyester, cellulose or polyamide can be used. As a preferred example, porous sheet of monolayer or multilayered structure formed of one species or two or more species of polyolefin resin for the main component (microporous resin sheet) may be cited. For instance, a PE sheet, a PP sheet, a sheet of a three-layer structure in which a PP layer is layered on each side of a PE layer (PP/PE/PP structure), or the like, may be used adequately. The thickness of the separator is set, for instance, preferably in a range of about 10 µm to 40 µm. The separator disclosed here may be of a constitution in which a porous heat-resistant layer is provided on one side or each side of the porous sheet, a non-woven fabric, or the like (typically, on one side). Such a porous heat-resistant layer may be a layer that contains, for instance, an inorganic material (inorganic fillers such as alumina particles may be adopted preferably) and a binder. Alternatively, it may be formed of a resin particle having insulating property (for instance, a particle of PE, PP, or the like).

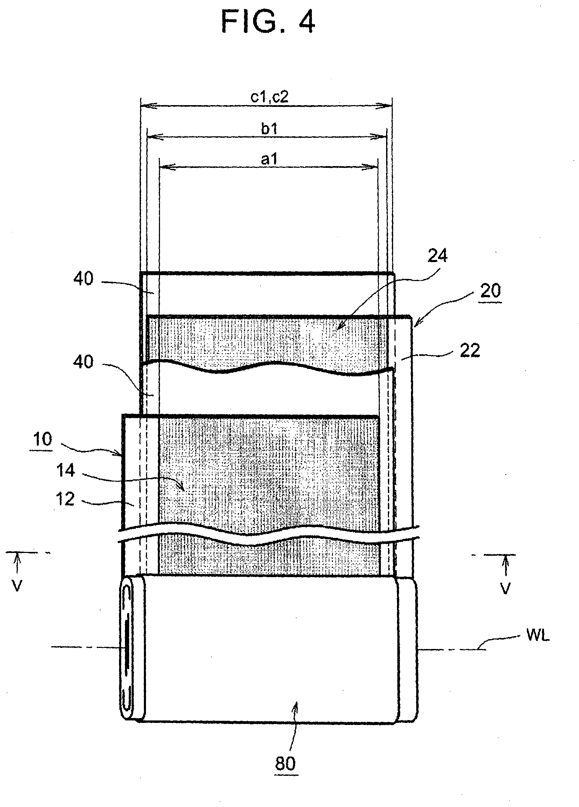

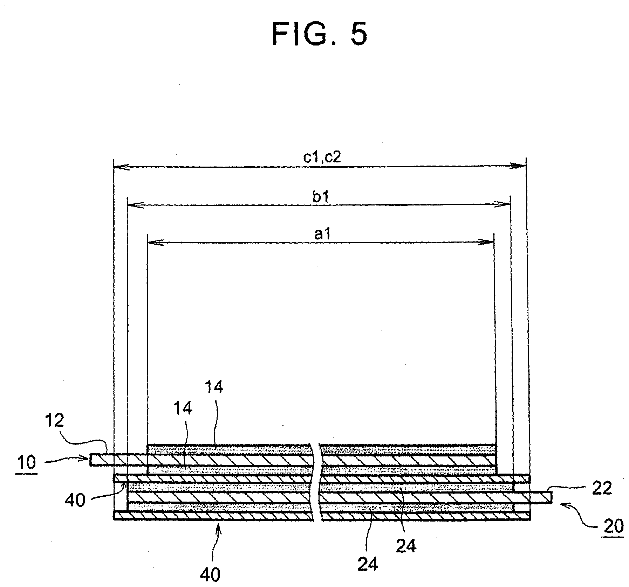

In this example, the width b1 of the negative electrode active material layer 24 is slightly wider than the width al of the positive electrode active material layer 14 (b1 > a1), as shown in FIG. 4 and FIG. 5. That is to say, the negative electrode active material layer 24 may have a portion that is not facing the positive electrode active material layer 14 (non-facing portion). With lithium ions being stored in the non-facing portion, lithium deposition onto the negative electrode can be suppressed effectively. However, if the non-facing portion is excessively wide, there is the possibility that an increase in irreversible capacity causes a decrease in cycle characteristics and storage characteristics. Therefore, it is desirable that the difference between b1 and a1 is 10 mm or less, and it is particularly desirable that both the left and right ends of b1 protrude from al by about 1 mm to 2 mm, respectively. That is to say, it is desirable that about 1 mm to 2 mm of non-facing portion of the negative electrode active material layer 24 is provided at both the left and right ends in the width direction of the positive electrode active material layer 14. In addition, the widths c1 and c2 of the separators 40 are preferably slightly wider than the width b1 of the negative electrode active material layer 24, with c1 and c2 > b1 > a1. A lithium secondary battery of such a constitution may be one with all the more excellent reliability.

### <Battery case 50>

As the material for the battery case 50, for instance, metallic materials such as aluminum and steel, and resin materials such as polyphenylene sulfide resin and polyimide resin may be cited. Among them, from the objective of heat dissipation improvement and raising energy density, a relatively light-weight metal (for instance, aluminum or aluminum alloy) may be adopted preferably. In addition, the shape of the battery case 50 (external form of the container) is not limited in particular, and may be, for instance, circular (cylindrical, coin-shaped or button-shaped), hexahedral (rectangular parallelepipedal (rectangular), cubic), bag-shaped, and shapes from processing and deforming these, or the like. In addition, the case can be provided with a safety mechanism such as a current-blocking mechanism (a mechanism that may block the current in response to an increase in internal pressure during overcharging of the battery).

### <Non-aqueous electrolytic solution>

As the non-aqueous electrolytic solution, those that contain an electrolyte (supporting salt) in a non-aqueous solvent (organic solvent) are used. As the non-aqueous solvent, one species or two or more species of organic solvents used in the electrolytic solution of a generic lithium ion secondary battery can be selected suitably and used. As particularly desirable non-aqueous solvents, carbonates such as ethylene carbonate (EC), diethyl carbonate (DEC), dimethyl carbonate (DMC), ethylmethyl carbonate (EMC), vinylene carbonate (VC) and propylene carbonate (PC) are given as examples. For instance, a mixed solvent that contains EC, DMC, EMC at a volume ratio of 3:4:3 can be used preferably.

As the electrolyte, one species or two or more species of lithium salts used as electrolytes in a generic lithium ion secondary battery can be selected suitably and used. As such lithium salts, LiPF₆, LiBF₄, LiClO₄, LiEBF₆, Li(CF₃SO₂)₂N, LiCF₃SO₃ or the like are given as examples. As a particularly desirable example, LiPF₆ may be cited. Preparation is preferably such that the electrolyte concentration in the non-aqueous electrolytic solution is, for instance, in a range of 0.7 mol/L to 1.3 mol/L (typically 1.0 mol/L to 1.2 mol/L).

The non-aqueous electrolytic solution may contain, as necessary, optional additives to the extent that the objectives of the invention are not impeded significantly. Such additives may be used with one, two or more purposes, such as, for instance, improvement of output capability, improvement of storage ability (suppression of capacity decrease during storage, or the like), improvement of cycle characteristics, and improvement of initial charge-discharge efficiency, of the battery 100. As examples of preferred additive, fluorophosphate (preferably, difluorophosphate; for instance, lithium difluorophosphate represented by LiPO₂F₂), lithium bis oxalato borate (LiBOB), or the like, may be cited. It is adequate that the concentration of each additive in the non-aqueous electrolytic solution is, in general, 0.2 mol/L or lower (typically 0.005 mol/L to 0.2 mol/L), and for instance, 0.1 mol/L or lower (typically 0.01 mol/L to 0.1 mol/L) is possible. As one example of mixture, a non-aqueous electrolytic solution may be cited, containing both LiPO₂F₂ and LiBOB at respective concentrations of 0.01 mol/L to 0.05 mol/L (for instance, respectively, 0.025 mol/L).

The rolled electrode body 80 is housed into the battery case 50 and a suitable non-aqueous electrolytic solution is placed (injected) into the interior of this case 50 to impregnate the rolled electrode body 80. Then, the opening of the battery case main body 52 is sealed by welding, or the like, with the lid body 54 thereby completing the construction (assembly) of the lithium secondary battery 100 according to the embodiment. The sealing process of the battery case 50 and the placement (injection) process of the electrolytic solution can be carried out similarly to the conventional methods being carried out in the production of a lithium secondary battery. Thereafter, conditioning (initial charging and discharging) of the battery is carried out. Processes such as degassing and quality-control may be carried out as necessary.

Hereafter, a number of examples relating to the invention will be described; however, limiting the invention to those indicated in these examples is not the intention.

### <Preparation of a positive electrode active material particle of an open hollow structure>

First, nickel sulfate (NiSO₄), cobalt sulfate (CoSO₄) and manganese sulfate (MnSO₄) were dissolved in water to prepare an aqueous solution aq_{A} in which the molar ratio Ni:Co:Mn was 1:1:1 and the total concentration of Ni, Co and Mn was 1.8 mol/L. In addition, into a reaction tank equipped with a stirrer and a nitrogen introduction tube, on the order of half the capacity thereof of water was filled and heated to 40°C while stirring. The reaction tank was nitrogen-substituted, then, under nitrogen gas flow, the space inside the reaction tank was maintained in a non-oxidizing atmosphere at 2.0% oxygen concentration. Inside the reaction tank, suitable amounts of 25% (mass-based) sodium hydroxide aqueous solution and 25% (mass-based) ammonia water were added respectively to prepare an alkaline aqueous solution (NH₃·NaOH aqueous solution), in which the pH based on a solution temperature at 25°C was 12.0 and the ammonia concentration in the liquid phase was 20 g/L.

Next, the aqueous solution aq_{A}, the 25% sodium hydroxide aqueous solution and the 25% ammonia water respectively prepared as described above were supplied at constant rate to the alkaline aqueous solution inside the reaction tank. While the reaction solution in which each had been mixed was being maintained to pH 12.0 or above (concretely, pH 12.0 to 14.0) and 20 g/L ammonia concentration, hydroxide was crystallized from the reaction solution (nucleation stage).

Then, the supply rate of each solution to the reaction tank was regulated for adjusting pH of the reaction solution to less than 12.0 (concretely, 10.5 to 11.9), while controlling the ammonia concentration in the liquid phase to a constant concentration in the range of 1 to 10 g/L, particle growth reaction of the nuclei generated above was carried out (particle growth stage). The product was removed from the reaction tank, washed with water and dried to obtain a complex hydroxide (precursor hydroxide) with Ni_{0.34}Co_{0.33}Mn_{0.33}(OH)₂ as the basic constitution. A heat treatment was conducted on this precursor hydroxide, in air atmosphere, at 150°C for 12 hours.

Thereafter, the precursor hydroxide and Li₂CO₃ (lithium source) were mixed in such a way that the molar ratio (Ni+Co+Mn):Li (that is to say m_{T}:m_{Li}) was 1.16:1 (mixing step). This unbaked mixture was, in air atmosphere, subjected to a primary baking stage of being held at 900°C (T1) maximum baking temperature for 3 hours (t1), and then subjected to a secondary baking stage of being held at 730°C (T2) maximum baking temperature for 8 hours (t2). Thereafter, the baked product was cooled and ground, and sieve-separation was carried out. In this way, a positive electrode active material particle of an open hollow structure of an average composition represented by Li_{1.14}Ni_{0.34}Co_{0.33}Mn_{0.33}O₂ was obtained.

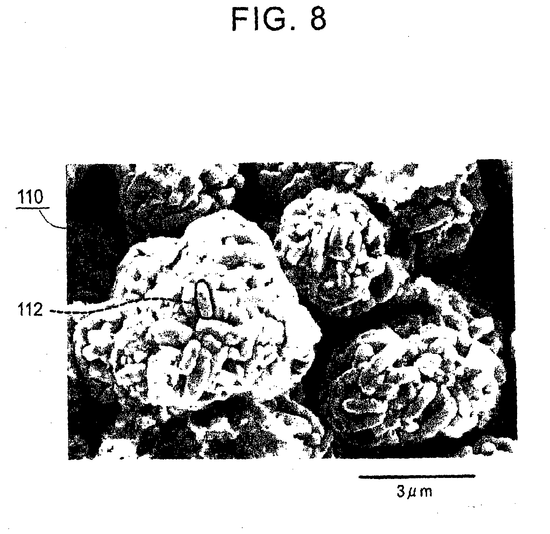

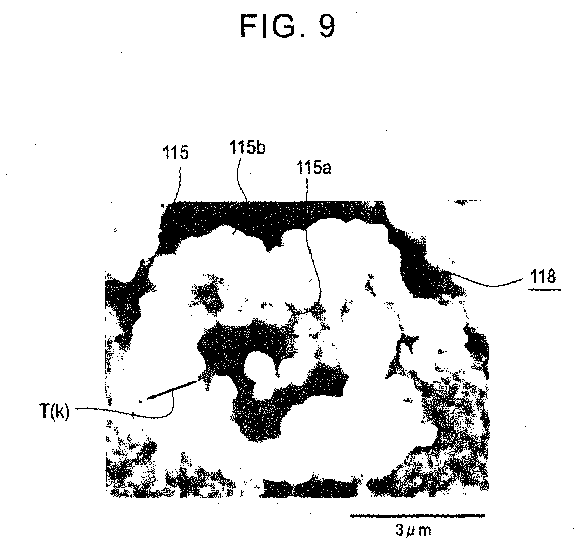

SEM observations of the particles obtained in this way were carried out. The results are shown in FIG. 8 and FIG. 9. FIG. 8 is an SEM observation picture of the positive electrode active material particles obtained as described above and FIG. 9 is a cross-sectional SEM observation picture of the positive electrode active material particle that was embedded, ground and cross-sectionally exposed. As shown in FIG. 8 and FIG. 9, the positive electrode active material particles obtained as described above is of a morphology of a secondary particle 110 in which primary particles 112 have gathered, and were provided with a clear shell portion 115 and a hollow portion 116. In addition, it was verified that 1 or more through-holes 118 per particle were formed on average in the shell portion 115 and that the shell portion was sintered compactly in portions other than this through-hole, as shown in FIG. 9. When this observation was performed in 10 arbitrary locations, the proportion of the hollow portion 116 (the proportion occupied by the hollow portion in the apparent cross-section of the active material) was about 23%, the thickness of the shell portion 115 (mean value of the shortest distance T(k) from an arbitrary position k of the internal face 115a of the shell portion 115 to the external face 115b of the shell portion 115) was about 1.2 µm and the long diameter L1 of the primary particle 112 was 0.7 µm. In addition, of the particles obtained as described above, the particle size (secondary particle size), the hardness and the half-height width ratio (A/B) were measured by methods already described above. As a result, the ranges were observed to be about 3 µm to 8 µm for the average particle size, 0.5 MPa to 10 MPa for the average hardness and 0.4 to 0.6 for the half-height width ratio (A/B).

### <Preparation of a positive electrode active material particle of a solid structure>

A positive electrode active material particle of a solid structure represented by Li_{1.14}Ni_{0.34}Co_{0.33}Mn_{0.33}O₂ was obtained by a similar preparation method to the case of the open hollow structure described above, except that, in the particle growth stage, the particle growth reaction of the nuclei was carried out without controlling the ammonia concentration of the liquid phase (that is to say, while the ammonia concentration of the liquid phase was maintained at 20 g/L). The average particle size of the particle obtained above (secondary particle size) was about 3 µm to 8 µm.

### <Preparation of negative electrode active material particle>

As the negative electrode active material particle, one with a morphology in which the surface of a graphite particle serving as the core was coated with amorphous carbon by a so-called wet method. Concretely, pitch was mixed so as to have 4 mass% with respect to 96 mass% of commercial natural graphite particle, and baked under inert atmosphere at 800°C to 1,300°C for 10 hours baking. That is to say, covering proportion of the amorphous carbon on the graphite particle surface was changed in the example by varying the baking temperature to adjust the Kr adsorption amount. Thereafter, this baked product was cooled and ground, and sieve-separation was carried out. Then, a negative electrode active material particle was obtained, in which the average particle size was about 5 µm to 20 µm and Kr adsorption amount was about 2.8 m²/g to 5.1 m²/g.

The positive electrode active material particle and the negative electrode active material particle obtained above were used to construct an evaluation battery (lithium ion secondary battery), and capability evaluation thereof was carried out.

### <Production of positive electrode sheet>

A positive electrode active material particle (Li_{1.14}Ni_{0.34}Co_{0.33}Mn_{0.33}O₂:LNCM) of a structure shown in Table 1, acetylene black (AB) serving as conducting material and PVdF serving as binder were put into a kneader in such a manner that the mass ratio of these materials was LNCM:AB:PVdF = 90:8:2. A positive electrode active material slurry was prepared by kneading while adjusting the viscosity with N-methyl pyrrolidone (NMP) in such a manner that the solid content concentration (NV) was 50 mass%. Onto a 15 µm-thick aluminum foil (positive electrode collector) in continuous sheet-form, this slurry was coated into a band-shape at 11.2 mg/cm² mass per unit surface (each side) and dried (80°C drying temperature; 5 minutes) to produce a positive electrode sheet with a positive electrode active material layer provided on each side of the positive electrode collector (coating width: 98 mm; length: 3,000 mm). Then, the positive electrode sheet was pressed so as to adjust the density of the positive electrode active material layer to be 1.8 g/cm³ to 2.4 g/cm³ and obtain the positive electrode sheets of Example 1 to Example 9.

### <Production of negative electrode sheet>

A negative electrode active material (natural graphite with the surface coated with amorphous carbon: C) having the Kr adsorption amount shown in Table 1, SBR serving as binder and CMC serving as thickener were put into a kneader in such a manner that the mass ratio of these materials was C:SBR:CMC = 98.6:0.7:0.7. A negative electrode active material slurry was prepared by kneading while adjusting the viscosity with ion-exchanged water in such a manner that the solid content concentration (NV) was 45 mass%. Onto a 10 µm-thick continuous copper foil (negative electrode collector) in continuous sheet-form, this slurry was coated into a band-shape at 7.3 mg/cm² (each side) and dried (80°C drying temperature; 5 minutes) to produce a negative electrode sheet with a negative electrode active material layer provided on each side of the negative electrode collector (coating width: 102 mm; length: 3,200 mm). Then, the negative electrode sheet was pressed so as to adjust the density of the negative electrode active material layer to be 1.1 g/cm³ to 1.3 g/cm³ and obtain the negative electrode sheets of Example 1 to Example 9.

### <Construction of lithium secondary battery>

The positive electrode sheet and the negative electrode sheet produced above were disposed face-to-face through two separator sheets (used here was a porous sheet of a three-layer structure in which a PP layer is layered on each side of a PE layer, with a porous heat-resistant layer with alumina as the main component provided on the surface (total thickness: 20 µm)) and rolled. Thereafter, a rolled electrode body was produced by forming into a flat shape. Here, the number of turns in the rolled electrode body (the number of turns in the flat-folded state) was about 29 turns, and the ratio (Cₐ/C_{c}) between the positive electrode capacity (C_{c}) and the negative electrode capacity (Cₐ) was adjusted to about 1.5 to 2. In addition, the coating width of the negative electrode active material layer protrudes from both the left and the right ends of the coating width of the positive electrode active material layer by about 2 mm respectively.

Bonded by welding were, respectively, a positive electrode terminal onto the positive electrode collector end (non-coated portion of the positive electrode active material layer) of the rolled electrode body and a negative electrode terminal onto the end of the negative electrode collector (non-coated portion of the negative electrode active material layer non-coated portion). Thereafter, the electrode body was housed into a rectangular battery case and a non-aqueous electrolytic solution was injected (used here was one in which LiPF₆ serving as an electrolyte was dissolved at a concentration of 1.1 mol/L and additives (difluorophosphate (LiPO₂F₂) and lithium bisoxalato borate (LiBOB)) were further dissolved each at a concentration of 0.025 mol/, in a mixed solvent containing EC, DMC and EMC at a volume ratio of EC:DMC:EMC = 3:4:3). Then, the battery case was sealed (airtight) to construct a rectangular lithium ion secondary battery (Example 1 to Example 9).

**[Table 1]**

| | Positive electrode active material particle structure | Negative electrode active material Kr absorption amount [m²/g] | Evaluation items | | |
|---|---|---|---|---|---|
| | | | Output characteristics Output [W] | Charge-pulse test Capacity retention rate [%] | High-temperature storage test Capacity retention rate [%] |
| Example 1 | Solid | 4.2 | 684 | 87.0 | 83.3 |
| Example 2 | Hollow | 4.2 | 716 | 86.7 | 83.2 |
| Example 3 | Hollow | 2.8 | 717 | 64.0 | 91.0 |
| Examole 4 | Hollow | 3.2 | 720 | 75.0 | 89.2 |
| Example 5 | Hollow | 3.6 | 721 | 84.8 | 88.0 |
| Example 6 | Hollow | 4.0 | 722 | 86.0 | 85.0 |
| Example 7 | Hollow | 4.3 | 722 | 86.3 | 80.3 |
| Example 8 | Hollow | 4.6 | 716 | 87.0 | 78.0 |
| Example 9 | Hollow | 5.1 | 720 | 87.2 | 76.5 |

### <Conditioning>

With respect to an evaluation battery constructed as described above, conditioning was conducted according to the following protocols 1 and 2. [Protocol 1]: after 4.1 V is reached with a constant current charging at 1 C, pause for 5 minutes. [Protocol 2]: after protocol 1, charge for 1.5 hours with a constant voltage charging, and pause for 5 minutes.

### <Measurement of rated capacity (initial capacity)>

For the evaluation battery after the above conditioning, the rated capacity was measured at 25°C temperature and in a voltage range of 3.0 V to 4.1V according to the following protocols 1 to 3. [Protocol 1]: after reaching 3.0 V by a constant current discharging of 1 C, discharge for 2 hours with a constant voltage discharging, thereafter, pause for 10 seconds. [Protocol 2]: after reaching 4.1 V with a constant current charging of 1 C, charge for 2.5 hours with a constant voltage charging, thereafter, pause for 10 seconds. [Protocol 3]: after reaching 3.0 V by a constant current discharging of 0.5 C, discharge for 2 hours with a constant voltage discharging, thereafter, pause for 10 seconds. The discharge capacity in the discharge from the constant current discharging up to the constant voltage discharging in protocol 3 (CCCV-discharge capacity) is the rated capacity. For this evaluation battery, the rated capacity was about 3.8 Ah.

### <Output measurement>

Next, the output at 25°C of the evaluation battery was measured according to the following protocols 1 to 4. [Protocol 1: adjustment of SOC]: in a temperature environment of 25°C, the evaluation battery after the rated capacity measurement described above is charged from 3 V to 60% SOC at a constant current of 1 C (CC charging) and then charged at a constant voltage for 2.5 hours (CV-charging). [Protocol 2): in a temperature environment of 25°C, the battery after protocol 1 is discharged at a constant wattage (W) and the number of seconds from the beginning of the discharge until the voltage becomes 2.0 V (discharge cut voltage) is measured. [Protocol 3]: repeat the above protocols 1 to 3 changing the discharge output in the constant wattage discharging of protocol 2 (the discharge power amount in the constant wattage discharging) between 80 W and 200 W (more concretely, while increasing the discharge output in the constant wattage discharging of protocol 3, 10 W at a time up to 200 W, as in, 80 W the first time, 90 W the second time, 100 W the third time and so on). [Protocol 4]: from the approximation curve of a plot in which the number of seconds until 2.0 V voltage measured in each constant wattage discharging of protocol 3 is reported on the horizontal axis and the constant wattage discharging output at that time is reported on the vertical axis, the output value (60% SOC output) at when the number of seconds until 2.0 V voltage becomes 2 seconds is determined.

The results of output measurements at about 60% SOC are indicated in the appropriate fields of Table 1. The results show the output characteristics that the evaluation battery may exhibit in case of a relatively low charge amount, on the order of 60% SOC. That is to say, they indicate that the higher the value of the output (W), the evaluation battery may exhibit high output. As is apparent from Table 1, the batteries of Example 2 to Example 9, which used as the battery positive electrode active material one of a hollow structure, showed high output characteristics compared to the battery of Example 1, which used a particle of a solid structure. It was found that there were almost no differences in the output characteristics among Example 2 to Example 9 and that the influence due to the properties (for instance, Kr adsorption amount and average particle size) of the negative electrode active material was small.

### <Capacity retention rate after pulse-charging test>

Next, with respect to an evaluation battery adjusted to an SOC of about 60% of the rated capacity, the capacity retention rate (%) after pulse-charging cycles were carried out was evaluated. Here, with the pulse-charging pattern composed of the following steps (1) to (3), 6,000 cycles of charging and discharging were carried out, then, the discharge capacity (capacity after pulse test) was measured in the same conditions as the initial capacity to calculate the ratio between them "(battery capacity after pulse test/initial capacity)×100". [Step 1]: charge for 0.1 seconds at a constant current of 40 C (here, 152 A). [Step 2]: discharge for 10 seconds at a constant current of 0.4C. [Step 3]: pause for 29.9 seconds. However, each 100 times the charging and discharging cycle composed of (1) to (3) is repeated, charge at a constant current of 1C from 3 V to 60% SOC (CC charging), and then charge at the same voltage for 2.5 hours (CV-charging) thereby adjusting to 60% SOC.

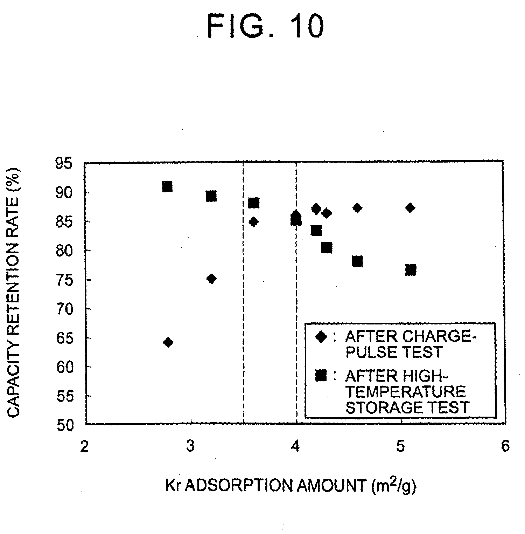

The capacity retention rates (%) after charge-pulse test are indicated in the appropriate fields of Table 1 and in FIG. 10. The results show durability in case charging (input) of a large current is repeated, as when pulse-charging. As is clear from FIG. 10, it was shown that the larger the Kr adsorption amount of the negative electrode active material, the more elevated the capacity retention rate, that is to say, excellent was the durability when large current charging is repeated. For instance, it was shown that by setting the krypton adsorption amount to 3.5 m²/g or greater, a capacity retention rate of 80% or greater may be maintained. Such results represent the effects of the invention.

### <Capacity retention rate after high-temperature storage test>

Next, the capacity retention rate (%), after being stored in a high-temperature environment for a predetermined time, of an evaluation battery adjusted to a prescribed SOC, was evaluated. Here, after an evaluation battery adjusted to 90% SOC was stored under an environment of 60°C for 100 days, the discharge capacity (capacity after high-temperature storage test) was measured in similar conditions to the initial capacity to calculate the ratio between them "capacity after high-temperature storage test/initial capacity)×100".

The capacity retention rate (%) after high-temperature storage test are indicated in the appropriate fields of Table 1 and in FIG. 10. The results show the durability under conditions where the non-aqueous electrolytic solution is prone to decomposition, as in high-temperature storage. As is apparent from FIG. 10, it was shown that, contrary to the capacity retention rate (%) after charge-pulse test, the fewer the Kr adsorption amount of the negative electrode active material, the more elevated the capacity retention rate, that is to say, excellent were the storage characteristics. For instance, it was shown that by setting the krypton adsorption amount to 4 m²/g or less, a capacity retention rate of 85% or greater may be maintained. Such results represent the effects of the invention.

Thus, adopting a positive electrode active material particle of a hollow structure (here, an open hollow structure) as the positive electrode active material particle is desirable. In addition, the krypton adsorption amount of the negative electrode active material particle is preferably 3.5 m²/g or more but 4 m²/g or fewer. The lithium secondary battery provided with the positive electrode active material and the negative electrode active material described above was shown to combine both input-output characteristics and durability at high levels.

With that, the invention has been described in detail; however, the embodiments described above are merely illustrative, and the invention disclosed herein include those that are alterations and modifications from the above concrete examples.

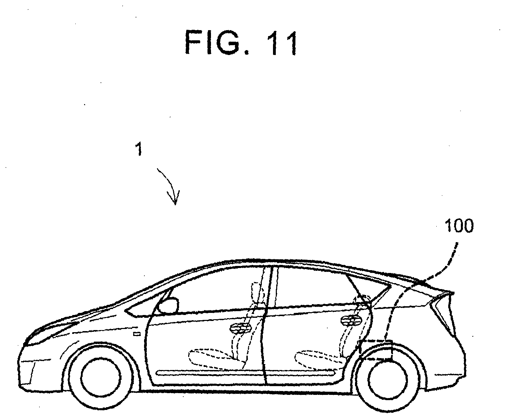

A lithium secondary battery provided by the technique disclosed herein, due to demonstrating excellent capabilities as described above, is usable as a lithium secondary battery oriented towards various applications. For instance, it is suited as a power source for a motor (electric motor) equipping a vehicle such as an automobile. Such a lithium secondary battery can be used in the morphology of a battery-pack formed of a plurality of these batteries connected in series and/or in parallel. Therefore, according to the technique disclosed herein, a vehicle 1 (a vehicle equipped with an electric motor such as, typically, an automobile, in particular, an HV, a PHV, an EV, a fuel cell vehicle, a motorcycle, an electric power-assisted bicycle, an electric wheel-chair, an electric railway, or the like) equipped with such lithium secondary battery 100 (may be of a morphology of a battery-pack) as the power source, as shown schematically in FIG. 11, may be provided.

## Claims

1. A lithium secondary battery comprising:
an electrode body (80) containing a positive electrode (10) and a negative electrode (20);
a non-aqueous electrolytic solution; and
a battery case (50) in which the electrode body and the non-aqueous electrolytic solution are housed, wherein
the positive electrode includes a positive electrode active material particle (110) of a hollow structure having a shell portion (115) formed of a lithium transition metal oxide and a hollow portion (116) formed therein, and
the negative electrode is provided with a negative electrode active material particle formed of a carbon material;
the lithium secondary battery being **characterized in that**:
a long diameter of a primary particle of the lithium transition metal oxide based on SEM observation is 1 µm or less, and a thickness of the shell portion based on SEM observation is 2 µm or less,
the lithium transition metal oxide of the shell portion (115) is lamellar;
a krypton adsorption amount of the negative electrode active material particle is 3.5 m²/g or greater but 4 m²/g or less, and
for the positive electrode active material particle (110), a ratio A/B is 0.4 or greater but less than 0.7, where A is a half-weight width of a peak obtained from a diffraction plane of Miller index (003) in a powder X-ray diffraction pattern of the positive electrode active material obtained using a CuKα-beam, and B is a half-weight width of a peak obtained from a diffraction plane of Miller index (104) in the powder X-ray diffraction pattern.

2. The lithium secondary battery according to claim 1, **characterized in that**
the positive electrode active material particle has a through-hole (118) passing through the shell portion.

3. The lithium secondary battery according to claim 1 or 2, **characterized in that**
a particle void content of the positive electrode active material particle is 15% or greater but 80% or lower.

4. The lithium secondary battery according to any one of claims 1 to 3, **characterized in that**
the long diameter of the primary particle of lithium transition metal oxide based on SEM observation is 0.2 µm or greater.

5. The lithium secondary battery according to any one of claims 1 to 4, **characterized in that**
the thickness of the shell portion based on SEM observation is 0.1 µm or greater.

6. The lithium secondary battery according to any one of claims 1 to 5, **characterized in that**
the lithium transition metal oxide has, as a main component, a lithium transition metal oxide represented by the following general formula (I):
Li₁₊ₓNi_{y}Co_{z}Mn_{(1-y-z)}M_{γ}O₂ (I)
(where 0 ≤ x ≤ 0.2, 0.1 < y < 0.9, 0.1 < z < 0.4 and 0 ≤ γ ≤ 0.03, and M is one species, or two or more species, of element selected from the group consisting of Zr, Mo, W, Mg, Ca, Na, Fe, Cr, Zn, Si, Sn, Al, B and F).

7. The lithium secondary battery according to any one of claims 1 to 6, **characterized in that**
the negative electrode active material particle contains a graphite coated with amorphous carbon.

8. The lithium secondary battery according to any one of claims 1 to 7, **characterized in that**
an oil absorption amount of the negative electrode active material particle for linseed oil is 50 ml/100 g or greater but 60 ml/100 g or less.

9. The lithium secondary battery according to any one of claims 1 to 8, **characterized in that**
a ratio (Cₐ/C_{c}) between a positive electrode capacity (C_{c}) calculated by a product of a theoretical capacity per unit mass of the positive electrode active material and the mass of the positive electrode active material, and a negative electrode capacity (Cₐ) calculated by the product of a theoretical capacity per unit mass of the negative electrode active material and the mass of the negative electrode active material, is 1.7 or greater but 1.9 or lower.

10. The lithium secondary battery according to any one of claims 1 to 9, **characterized in that**
the electrode body is provided with an elongated positive electrode in which a positive electrode active material layer of a prescribed width is formed over an elongated positive electrode collector along a lengthwise direction of the collector, and an elongated negative electrode in which a negative electrode active material layer of a prescribed width is formed over an elongated negative electrode collector along the lengthwise direction of the collector, and
the electrode body is a rolled electrode body having the elongated positive electrode and the elongated negative electrode layered in insulated state and rolled in the lengthwise direction.

11. A vehicle comprising the lithium secondary battery according to any one of claims 1 to 10 as a drive power source.

## Patentansprüche

1. Lithium-Sekundärbatterie, umfassend:
einen Elektrodenkörper (80), der eine positive Elektrode (10) und eine negative Elektrode (20) enthält,
eine nichtwässrige Elektrolytlösung und
ein Batteriegehäuse (50), in dem der Elektrodenkörper und die nichtwässrige Elektrolytlösung aufgenommen sind, wobei
die positive Elektrode ein Positivelektroden-Aktivmaterialpartikel (110) von einer hohlen Struktur umfasst, die einen Schalenabschnitt (115), der aus einem Lithium-Übergangsmetalloxid gebildet ist, und einen darin ausgebildeten hohlen Abschnitt (116) aufweist, und
die negative Elektrode mit einem Negativelektroden-Aktivmaterialpartikel, das aus einem Kohlenstoffmaterial gebildet ist, versehen ist,
wobei die Lithium-Sekundärbatterie **dadurch gekennzeichnet ist, dass**:
ein Langdurchmesser eines Primärpartikels des Lithium-Übergangsmetalloxids basierend auf SEM-Beobachtung 1 µm oder kleiner ist und eine Dicke des Schalenabschnitts basierend auf SEM-Beobachtung 2 µm oder kleiner ist,
das Lithium-Übergangsmetalloxid des Schalenabschnitts (115) lamellenförmig ist,
eine Kryptonadsorptionsmenge des Negativelektroden-Aktivmaterialpartikels 3,5 m²/g oder größer, jedoch 4 m²/g oder kleiner ist und
für das Positivelektroden-Aktivmaterialpartikel (110) ein Verhältnis A/B 0,4 oder größer, jedoch kleiner als 0,7 ist, wobei A eine Halbgewichtsbreite einer Spitze ist, die von einer Beugungsebene vom Miller-Index (003) in einem Pulver-Röntgenbeugungsmuster des Positivelektroden-Aktivmaterials, das mittels eines CuKα-Slrahls gewonnen wird, und B eine Halbgewichtsbreite einer Spitze ist, die von einer Beugungsebene vom Miller-Index (104) in dem Pulver-Röntgenbeugungsmuster gewonnen wird.

2. Lithium-Sekundärbatterie nach Anspruch 1, **dadurch gekennzeichnet, dass**
das Positivelektroden-Aktivmaterialpartikel ein Durchgangsloch (118) aufweist, welches durch den Schalenabschnitt verläuft.

3. Lithium-Sekundärbatterie nach Anspruch 1 oder 2, **dadurch gekennzeichnet, dass**
ein Partikelhohlraumanteil des Positivelektroden-Aktivmaterialpartikels 15% oder größer, jedoch 80% oder kleiner ist.

4. Lithium-Sekundärbatterie nach einem beliebigen der Ansprüche 1 bis 3, **dadurch gekennzeichnet, dass**
der Langdurchmesser des Primärpartikels von Lithium-Übergangsmetalloxid basierend auf SEM-Beobachtung 0,2 µm oder größer ist.

5. Lithium-Sekundärbatterie nach einem beliebigen der Ansprüche 1 bis 4, **dadurch gekennzeichnet, dass**
die Dicke des Schalenabschnitts basierend auf SEM-Beobachtung 0,1 µm oder größer ist.

6. Lithium-Sekundärbatterie nach einem beliebigen der Ansprüche 1 bis 5, **dadurch gekennzeichnet, dass**
das Lithium-Übergangsmetalloxid als eine Hauptkomponente ein Lithium-Übergangsmetalloxid aufweist, das durch die folgende allgemeine Formel (I) dargestellt wird:
Li₁₊ₓNi_{y}Co₂Mn_{(1-y-z)}M_{γ}O₂ (I)
(wobei 0 ≤ x ≤ 0,2, 0,1 < y < 0,9, 0,1 < z < 0,4 und 0 ≤ γ ≤ 0,03 und M eine Spezies oder zwei oder mehr Spezies eines aus der aus Zr, Mo, W, Mg, Ca, Na, Fe, Cr, Zn, Si, Sn, Al, B und F) bestehenden Gruppe ausgewählten Elementes ist.

7. Lithium-Sekundärbatterie nach einem beliebigen der Ansprüche 1 bis 6, **dadurch gekennzeichnet, dass**
das Negativelektroden-Aktivmaterialpartikel mit amorphem Kohlenstoff beschichteten Graphit enthält.

8. Lithium-Sekundärbatterie nach einem beliebigen der Ansprüche 1 bis 7, **dadurch gekennzeichnet, dass**
eine Ölabsorptionsmenge des Negativelektroden-Aktivmaterialpartikels für Leinöl 50 ml/100 g oder größer, jedoch 60 ml/100 g oder kleiner ist.

9. Lithium-Sekundärbatterie nach einem beliebigen der Ansprüche 1 bis 8, **dadurch gekennzeichnet, dass**
ein Verhältnis (Cₐ/C_{c}) zwischen einer Positivelektrodenkapazität (C_{c}), die durch ein Produkt aus einer theoretischen Kapazität pro Masseneinheit des Positivelektroden-Aktivmaterials und der Masse des Positivelektroden-Aktivmaterials berechnet wird, und einer Negativelektrodenkapazität (Cₐ), die durch das Produkt aus einer theoretischen Kapazität pro Masseneinheit des Negativelektroden-Aktivmaterials und der Masse des Negativelektroden-Aktivmaterials berechnet wird, 1,7 oder größer, jedoch 1,9 oder kleiner ist.

10. Lithium-Sekundärbatterie nach einem beliebigen der Ansprüche 1 bis 9, **dadurch gekennzeichnet, dass**
der Elektrodenkörper versehen ist mit einer länglichen positiven Elektrode, in der eine Positivelektroden-Aktivmaterialschicht von einer vorgeschriebenen Breite über einem länglichen Positivelektrodenkollektor entlang einer Längsrichtung des Kollektors ausgebildet ist, und mit einer länglichen negativen Elektrode, in der eine Negativelektroden-Aktivmaterialschicht von einer vorgeschriebenen Breite über einem länglichen Negativelektrodenkollektor entlang der Längsrichtung des Kollektors ausgebildet ist, und
der Elektrodenkörper ein gewalzter Elektrodenkörper ist, der die längliche positive Elektrode und die längliche negative Elektrode in isoliertem Zustand geschichtet und in der Längsrichtung gewalzt aufweist.

11. Fahrzeug, umfassend die Lithium-Sekundärbatterie nach einem beliebigen der Ansprüche 1 bis 10 als Antriebsenergiequelle.

## Revendications

1. Batterie au lithium comprenant :
un corps d'électrodes (80) contenant une électrode positive (10) et une électrode négative (20) ;
une solution électrolytique non aqueuse ; et
un boîtier de batterie (50) où le corps d'électrodes et la solution électrolytique non aqueuse sont logés, dans laquelle
l'électrode positive contient une particule de matériau actif d'électrode positive (110) ayant une structure creuse avec une partie coque (115) formée en oxyde de métal de transition et de lithium et une partie creuse (116) formée dans celle-ci, et
l'électrode négative comprend une particule de matériau actif d'électrode négative formée en matériau carboné ;
la batterie au lithium étant **caractérisée en ce que** :
un diamètre long d'une particule primaire d'oxyde de métal de transition et de lithium basé sur une observation au MEB est de 1 µm ou moins, et une épaisseur de la partie coque basée sur une observation au MEB est de 2 µm ou moins,
l'oxyde de métal de transition et de lithium de la partie coque (115) est lamellaire ;
une quantité d'adsorption de krypton de la particule de matériau actif d'électrode négative est de 3,5 m²/g ou plus mais de 4 m²/g ou moins, et
pour la particule de matériau actif d'électrode positive (110), un rapport A/B est de 0,4 ou plus mais inférieur à 0,7, où A est une largeur à mi-poids d'un pic obtenu à partir d'un plan de diffraction des indices de Miller (003) dans un diagramme de diffraction des rayons X sur poudre du matériau actif d'électrode positive obtenu à l'aide d'un faisceau CuKα, et B est une largeur à mi-poids d'un pic obtenu à partir d'un plan de diffraction des indices de Miller (104) dans un diagramme de diffraction des rayons X sur poudre.

2. Batterie au lithium selon la revendication 1, **caractérisée en ce que** la particule de matériau actif d'électrode positive comporte un trou traversant (118) qui traverse la partie coque.

3. Batterie au lithium selon la revendication 1 ou 2, **caractérisée en ce qu'**une teneur en vide de particule de la particule de matériau actif d'électrode positive est de 15 % ou plus mais de 80 % ou moins.

4. Batterie au lithium selon l'une quelconque des revendications 1 à 3, **caractérisée en ce que**
le diamètre long de la particule primaire d'oxyde de métal de transition et de lithium basé sur une observation au MEB est de 0,2 µm ou plus.

5. Batterie au lithium selon l'une quelconque des revendications 1 à 4, **caractérisée en ce que**
l'épaisseur de la partie coque basée sur une observation au MEB est de 0,1 µm ou plus.

6. Batterie au lithium selon l'une quelconque des revendications 1 à 5, **caractérisée en ce que**
l'oxyde de métal de transition et de lithium contient, à titre de composant principal, un oxyde de métal de transition et de lithium représenté par la formule générale (I) suivante :
Li₁₊ₓNi_{y}Co_{z}Mn_{(1-y-z)}M_{γ}O₂ (I)
(où 0 ≤ x ≤ 0,2 ; 0,1 < y < 0,9 ; 0,1 < z < 0,4 et 0 ≤ γ ≤ 0,03 ; et M est une espèce, ou deux espèces ou plus, d'éléments choisis dans le groupe constitué par Zr, Mo, W, Mg, Ca, Na, Fe, Cr, Zn, Si, Sn, Al, B et F).

7. Batterie au lithium selon l'une quelconque des revendications 1 à 6, **caractérisée en ce que**
la particule de matériau actif d'électrode négative contient un graphite revêtu de carbone amorphe.

8. Batterie au lithium selon l'une quelconque des revendications 1 à 7, **caractérisée en ce que**
une quantité d'absorption d'huile de la particule de matériau actif d'électrode négative pour l'huile de lin est de 50 ml/100 g ou plus mais de 60 ml/100 g ou moins.

9. Batterie au lithium selon l'une quelconque des revendications 1 à 8, **caractérisée en ce que**
un rapport (Cₐ/C_{c}) entre une capacité d'électrode positive (C_{c}) calculée par un produit d'une capacité théorique par unité de masse du matériau actif d'électrode positive et de la masse du matériau actif d'électrode positive, et une capacité d'électrode négative (Cₐ) calculée par le produit d'une capacité théorique par unité de masse du matériau actif d'électrode négative et de la masse du matériau actif d'électrode négative, est de 1,7 ou plus mais de 1,9 ou moins.

10. Batterie au lithium selon l'une quelconque des revendications 1 à 9, **caractérisée en ce que**
le corps d'électrodes comprend une électrode positive allongée où une couche de matériau actif d'électrode positive de largeur prescrite est formée sur un collecteur d'électrode positive allongé dans le sens de la longueur du collecteur, et une électrode négative allongée où une couche de matériau actif d'électrode négative de largeur prescrite est formée sur un collecteur d'électrode négative allongé dans le sens de la longueur du collecteur, et
le corps d'électrodes est un corps d'électrodes enroulé comportant l'électrode positive allongée et l'électrode négative allongée stratifiées à l'état isolé et enroulées dans le sens de la longueur.

11. Véhicule équipé de la batterie au lithium selon l'une quelconque des revendications 1 à 10 à titre de source de puissance motrice.
